# EUROPEAN PATENT APPLICATION

(11) **EP 2 187 553 A1**
(43) Date of publication of application: **19.05.2010**
(21) Application number: 08836565.5
(22) Date of filing: 26.09.2008
(51) Int. Cl.: H04J 11/00, H04B 1/707, H04W 48/16

(54) **USER DEVICE AND VERIFICATION METHOD**

(30) Priority: 01.10.2007 JP 2007258106
(71) Applicant: NTT DoCoMo, Inc., Chiyoda-ku Tokyo 100-6150 (JP)
(72) Inventor: NAGATA, Satoshi, Tokyo 100-6150 (JP); KISHIYAMA, Yoshihisa, Tokyo 100-6150 (JP); HIGUCHI, Kenichi, Tokyo 100-6150 (JP); SAWAHASHI, Mamoru, Tokyo 100-6150 (JP); TANNO, Motohiro, Tokyo 100-6150 (JP)
(74) Representative: HOFFMANN EITLE
(86) International application number: PCT/JP2008/067510
(87) International publication number: WO 2009/044683

(57) **Abstract**

A user equipment performing a cell search and detecting cell-specific information including a cell ID.
The user equipment includes a receiving unit configured to receive a synchronization channel; a cell search unit configured to extract a primary synchronization channel and a secondary synchronization channel from the received synchronization channel to perform the cell search; and a verification unit configured to verify a detection result of the cell search based on a verification start condition.

## Description

### TECHNICAL FIELD

The present invention generally relates to a radio communication system employing orthogonal frequency division multiplexing (OFDM) for downlink. More particularly, the present invention relates to user equipment and a verification method.

### BACKGROUND ART

A successor communication system to W-CDMA and HSDPA, i.e., Long Term Evolution (LTE), is currently being discussed by 3GPP, a standardization group for W-CDMA. In LTE, orthogonal frequency division multiple access (OFDMA) is to be used as a downlink radio access method and single-carrier frequency division multiple access (SC-FDMA) is to be used as an uplink radio access method (see, for example, 3GPP TR 25.814 (V7.0.0), "Physical Layer Aspects for Evolved UTRA," June 2006).

In OFDMA, a frequency band is divided into multiple narrow frequency bands (subcarriers) and data are transmitted on the subcarriers. The subcarriers are densely arranged along the frequency axis such that they partly overlap each other but do not interfere with each other. This method enables high-speed transmission and improves frequency efficiency.

In SC-FDMA, a frequency band is divided into multiple frequency bands and the frequency bands are allocated to different terminals for transmission in order to reduce interference between the terminals. Also, SC-FDMA reduces variation of the transmission power and therefore makes it possible to reduce power consumption of terminals and to achieve wide coverage.

In OFDMA employed in LTE, two types of cyclic prefixes (CP), a long CP and a short CP having different lengths, are provided to reduce the influence of intersymbol interference caused by delayed signals. For example, the long CP is used in a cell with a large cell radius or to transmit a multimedia broadcast multicast service (MBMS) signal, and the short CP is used in a cell with a small cell radius. When the long CP is used, the number of OFDM symbols in a slot becomes six; and when the short CP is used, the number of OFDM symbols in a slot becomes seven.

Generally, when a mobile station is powered on, in the standby mode, in communications, or in the intermittent reception mode in a radio communication system employing W-CDMA or LTE, the mobile station has to find a cell proving good radio communication quality for the mobile station based on, for example, a synchronization channel (SCH). In other words, the mobile station searches for a cell to be connected to via a radio link. Therefore, this process is called "cell search". A cell search method is generally determined based on time necessary for a cell search and the processing load of the mobile station in performing the cell search. In other words, it is necessary to determine a cell search method so as to reduce the time necessary for a cell search and to reduce the processing load of the mobile station in performing the cell search.

In W-CDMA, two types of synchronization channels, a primary SCH (P-SCH) and a secondary SCH (S-SCH), are used for the cell search. Also in LTE, it is being discussed to employ the two types of synchronization channels P-SCH and S-SCH for the cell search.

In a cell search method being discussed, one sequence is used for the P-SCH and plural sequences are used for the S-SCH, and the P-SCH and the S-SCH are transmitted once in 5 ms (see, for example, R1-062990, "Outcome of cell search drafting session"). In this method, the P-SCH is used to identify a downlink reception timing from a cell, and the S-SCH transmitted in the same slot is used to determine a reception frame timing and to obtain cell-specific information such as a cell ID or a cell group (group ID). For demodulation and decoding of the S-SCH, a channel estimate obtained based on the P-SCH may generally be used. When cell IDs are grouped, the cell ID of a detected cell is determined from cell IDs belonging to the group ID of the cell. For example, a cell ID may be determined based on the signal pattern of a pilot signal. As another example, a cell ID may be determined based on demodulation and decoding results of the P-SCH and the S-SCH. Meanwhile, when cell IDs are not grouped, the cell ID of a cell may be provided as an information item in the S-SCH. In this case, the mobile station may obtain the cell ID by just demodulating and decoding the S-SCH.

However, if the above cell search method is applied to an inter-base-station synchronous system
where signals from multiple cells are synchronized, the transmission characteristics of S-SCHs may be degraded because the S-SCHs transmitted from multiple cells using different sequences are demodulated and decoded based on channel estimates obtained based on P--SCHs transmitted from the cells using the same sequence. Here, the transmission characteristics may include the time necessary for a cell search. Meanwhile, in an inter-base-station asynchronous system where signals from multiple cells are not synchronized, the above problem may not occur because the reception timings of P-SCH sequences transmitted from the cells are different from each other.

To prevent the above described characteristic degradation of S-SCHs in an inter-base-station synchronous system, a cell search method where plural sequences, for example, three or seven sequences, are used for P-SCHs is being studied (see, for example, R1-062636, "Cell Search Performance in Tightly Synchronized Network for E-UTRA"). Also to prevent the above described characteristic degradation of S-SCHs in an inter-base-station synchronous system, a cell search method where different transmission intervals are used by cells for transmission of P-SCHs has been proposed (see, for example, R1-070428, "Further analysis of initial cell search for Approach 1 and 2 - single cell scenario"). This method makes it possible to use P-SCHs received from plural cells at different reception timings to demodulate and decode S-SCHs and thereby makes it possible to prevent the characteristic degradation of S-SCHs.

From the view point of cell design, it is preferable to use as many types of sequences as possible for P-SCHs and as many different transmission intervals as possible. If the number of sequences used for P-SCH is small, the probability of the same sequence being used for P-SCHs of adjacent cells increases. Also, if the number of different transmission intervals for P-SCHs is small, the probability of P-SCHs of adjacent cells being transmitted at the same transmission interval increases. This in turn increases the probability that the characteristics of S-SCHs will be degraded in an inter-base-station synchronous system.

Meanwhile, the time necessary for a cell search, i.e., the transmission characteristics in a cell search, and the processing load of the mobile station in a cell search are inversely related to each other. Therefore, it is preferable to be able to select whether to attach importance to the transmission characteristics in a cell search or to the processing load of the mobile station in a cell search by setting parameters or by changing operational methods.

### DISCLOSURE OF INVENTION

### PROBLEM TO BE SOLVED BY THE INTENTION

However, the above background art technologies have problems as described below.

As described above, the synchronization channel (SCH) is a downlink signal used for a cell search. A hierarchical SCH structure is to be employed for the synchronization channel (see, for example, 3GPP TS 36.211 V1.0.0 (2007-03)). In the hierarchical SCH structure, the synchronization channel is composed of two subchannels: a primary synchronization channel (primary SCH) and a secondary synchronization channel (secondary SCH).

The secondary synchronization channel is used to report cell---specific information such as a cell ID group, a radio frame timing, and the number of transmitting antennas. The user equipment obtains the cell-specific information from a secondary synchronization channel sequence.

As described above, in wideband code division multiple access (W-CDMA), a neighboring cell search is performed when handover takes place and cell-specific information (neighboring cell information) of neighboring cells is reported to the user equipment before the neighboring cell search is performed. In the neighboring cell search performed during communications or during the standby mode to find a handover destination cell, it is possible to reduce the number of candidates of cell-specific information that have to be detected if neighboring cell information is reported in advance. In the LTE system, however, whether to report neighboring cell information has not been decided yet.

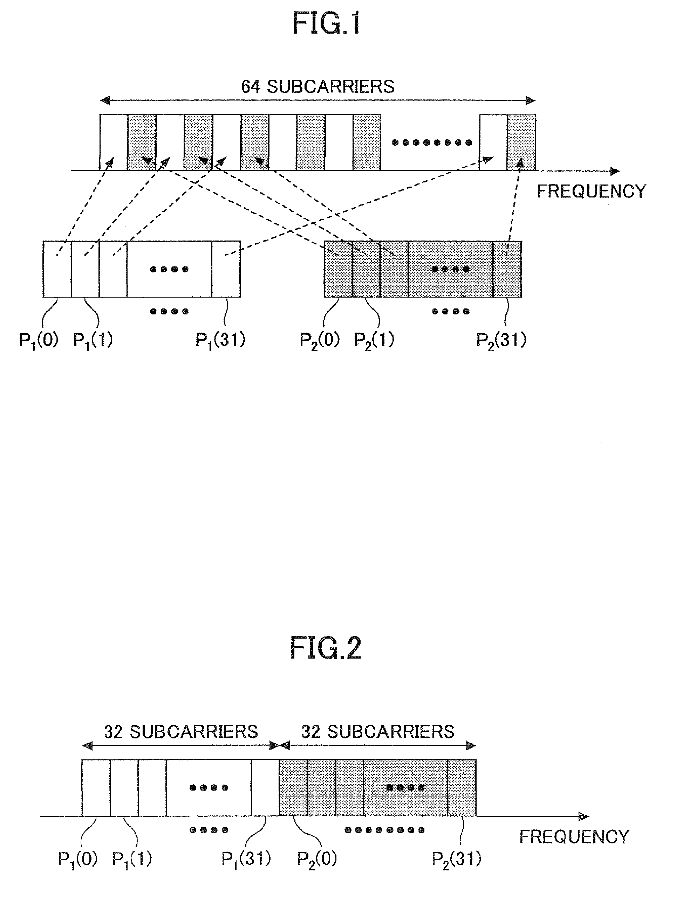

In a proposed method for mapping a secondary synchronization channel sequence, different sequences are mapped along the frequency direction (see, for example, 3GPP R1-060042 "SCH Structure and Cell Search Method in E-UTRA Downlink" and 3GPP R1-071584 "Secondary Synchronization Signal Design"). FIG. 1 shows an example of this method where an orthogonal sequence 1 (P₁(0), P₁(1), ···, P₁(31)) and an orthogonal sequence 2 (P₂(0), P₂(1), ···, P₂(31)) are mapped alternately to subcarriers. FIG. 2 shows another example where an orthogonal sequence 1 (P₁(0), P₁(1), ···, P₁(31)) and an orthogonal sequence 2 (P₂(0), P₂(1), ···, P₂(31)) are mapped, respectively, to consecutive subcarriers. Dividing a sequence into multiple sequences as shown in these examples makes it possible to increase the number of patterns that can be transmitted. For example, while only 64 patterns are available when one sequence with a sequence length of 64 is used, 1024 patterns are available when two sequences, each having a sequence length of 32, are used as shown in FIG. 2,

As proposed by 3GPP (see, for example, 3GPP TS 36.211 V1.0.0 (2007-03) and 3GPP R1-071794), multiple, for example, three Zadcff-Chu sequences are to be used for the P-SCH and binary sequences obtained by combining two short codes are to be used for the S-SCH.

However, using such S-SCH sequences may increase the peak-to-average power ratio, particularly, in an 1.25 MHz system.

The P-SCH and the S-SCH are transmitted in the same 1 ms subframe, and a subframe including the P-SCH and the S-SCH occurs every 5 ms. In other words, the synchronization channel is transmitted every 5 ms. The user equipment receives P-SCHs that differ from sector to sector and thereby obtains a channel estimate in the serving cell. Then, the user equipment performs channel compensation on S-SCHs that differ from cell to cell based on the obtained channel estimate and thereby demodulates the S-SCHs to perform a cell search. In the present application, "cell" may indicate a group of "sectors". Also, "cell" and "sector" may be used synonymously when there is no risk of confusion. In an inter-base-station synchronous system where signals from plural cells are synchronized, the mobile station receives the signals from the cells at the same time. A mobile station located near a boundary between sectors belonging to the same base station receives different P-SCHs from the sectors and can therefore distinguish the sectors from each other. Meanwhile, S-SCHs transmitted from the sectors are the same and therefore the mobile station receives the S--SCHs from the sectors as a combined signal. In this case, since it is difficult to accurately perform channel compensation on the S-SCHs based only on the channel estimate in the serving sector, the detection accuracy of the S--SCHs may be reduced. Assuming that the same S-SCH is transmitted every 5 ms from multiple cells, such interference occurs every 5 ms and the detection accuracy of the S-SCH at the mobile station may be reduced.

In the cell search described above, the mobile station performs a verification process after detecting cell-specific information such as a cell ID and a radio frame timing. In the verification process, the mobile station determines whether detection results are correct. If the verification process is not properly performed, it may lead to a detection failure or a false detection.

One object of the present invention is to provide user equipment and a verification method that make it possible to reduce occurrences of detection failures and false detections in a cell search.

### MEANS FOR SOLVING THE PROBLEMS

An aspect of the present invention provides a user equipment performing a cell search and detecting cell-specific information including a cell ID. The user equipment includes a receiving unit configured to receive a synchronization channel; a cell search unit configured to extract a primary synchronization channel and a secondary synchronization channel from the received synchronization channel to perform the cell search; and a verification unit configured to verify a detection result of the cell search based on a verification start condition.

Another aspect of the present invention provides a verification method for a user equipment performing a cell search and detecting cell-specific information including a cell ID. The verification method includes the steps of receiving a synchronization channel; extracting a primary synchronization channel and a secondary synchronization channel from the received synchronization channel to perform the cell search; and verifying a detection result of the cell search based on a verification start condition.

### ADVANTAGEOUS EFFECT OF THE INVENTION

An aspect of the present invention provides user equipment and a verification method that make it possible to reduce occurrences of detection failures and false detections in a cell search.

### BRIEF DESCRIPTION OF THE DRAWING

FIG. 1 is a drawing illustrating a method of mapping an S-SCH sequence;
FIG. 2 is a drawing illustrating a method of mapping an S-SCH sequence;
FIG. 3 is a drawing illustrating a configuration of a radio communication system according to an embodiment of the present invention;
FIG. 4 is a drawing illustrating a radio frame structure;
FIG. 5 is a drawing illustrating subframe structures;
FIG. 6 is a partial block diagram of a base station according to an embodiment of the present invention;
FIG. 7 is a block diagram of a baseband signal processing unit of a base station according to an embodiment of the present invention;
FIG. 8 is a drawing illustrating an exemplary synchronization signal transmission pattern;
FIG. 9A is a drawing illustrating a method of determining an S-SCH sequence;
FIG. 9B is a drawing illustrating another method of determining an S-SCH sequence;
FIG. 10 is a drawing illustrating another method of determining an S-SCH sequence;
FIG. 11 is a partial block diagram of a mobile station according to an embodiment of the present invention;
FIG. 12 is a flowchart showing a cell search method and a verification method according to an embodiment of the present invention;
FIG. 13 is a partial block diagram of a mobile station according to an embodiment of the present invention;
FIG. 14 is a flowchart showing a cell search method and a verification method according to an embodiment of the present invention;
FIG. 15 is a partial block diagram of a mobile station according to an embodiment of the present invention;
FIG. 16 is a drawing illustrating an exemplary method of generating a scrambling code for a primary broadcast channel;
FIG. 17 is a drawing illustrating transmission methods of SCHs; and
FIG. 18 is a block diagram illustrating a variation of a synchronization signal generating unit.

### EXPLANATION OF REFERENCES

- 50ₖ (50₁, 50₂, 50₃): Cell
- 100ₙ, (100₁, 100₂, 100₃, 100₄, 100₅): Mobile station
- 102: Basic waveform correlation unit
- 104: Synchronization signal replica generating unit
- 106: Timing detection unit
- 108: Base station cell number detection unit
- 110: S-SCH correlation unit
- 112: S-SCH detection unit
- 114: Verification unit
- 116: Reference signal error detection unit
- 118: Reference signal replica generating unit
- 200m: (200₁, 200₂, 200₃) Base station
- 202: Transceiver antenna
- 204: Amplifier
- 206: Transceiver unit
- 208: Baseband signal processing unit
- 209: Synchronization signal generating unit
- 210: Call processing unit
- 212: Transmission path interface
- 208₁: RLC processing unit
- 208₂: MAC processing unit
- 208₃: Encoding unit
- 208₄: Data modulation unit
- 208₅: Multiplexing unit
- 208₆: Serial-parallel converting unit
- 208₇: Multiplier
- 208₈: Multiplier
- 208₉: Scrambling code generating unit
- 208₁₀: Amplitude adjusting unit
- 208₁₁: Combining unit
- 208₁₂: Inverse Fourier transform unit
- 208₁₃: CP adding unit
- 209₁: Synchronization signal control unit
- 209₂: Synchronization signal generator
- 209₃: Data modulation unit
- 209₄: Serial-parallel converting unit
- 209₅: Multiplier
- 209₆: Amplitude adjusting unit
- 252: P-SCH generating unit
- 254: S-SCH generating unit
- 256: Multiplier
- 258: Scrambling sequence generating unit
- 260: Multiplexing unit
- 300: Access gateway
- 400: Core network
- 1000: Radio communication system

### BLEST MODE FOR CARRYING OUT THE INTENTION

Embodiments of the present invention are described below with reference to the accompanying drawings. Throughout the accompanying drawings, the same reference numbers are used for parts having the same functions, and overlapping descriptions of those parts are omitted.

### «FIRST EMBODIMENT»

### <SYSTEM>

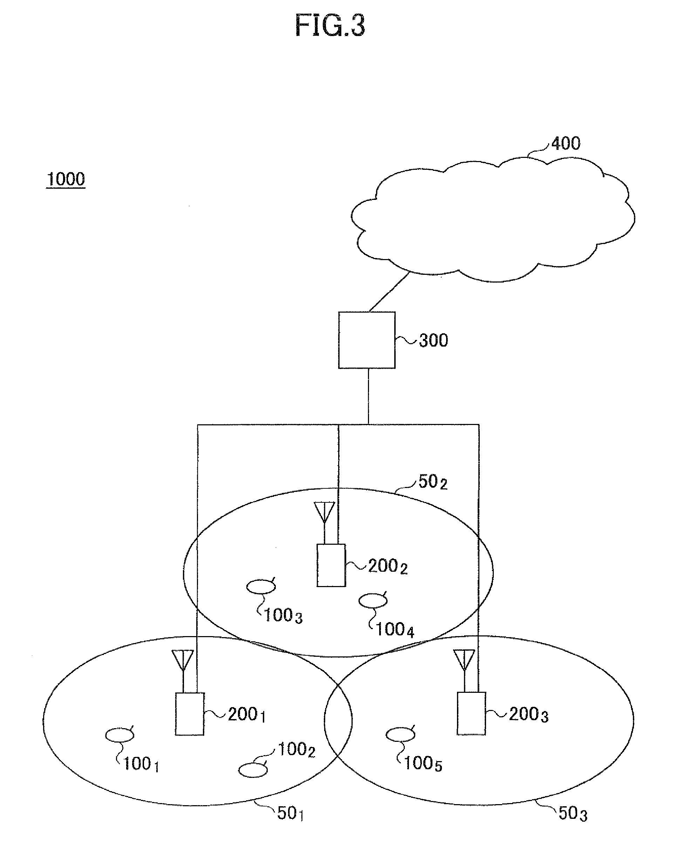

A radio communication system 1000 including mobile stations and base stations according to an embodiment of the present invention is described below with reference to FIG. 3.

The radio communication system 1000 is based on, for example, Evolved UTRA and UTRAN (also called Long Term Evolution or Super 3G). The radio communication system 1000 includes base stations (eNode B: eNB) 200ₘ (200₁, 200₂, 200₃, ..., 200ₘ, where m is an integer greater than 0) and mobile stations (user equipment) 100ₙ (100₁, 100₂, 100₃, ..., 100ₙ, where n is an integer greater than 0) that communicate with the base stations 200ₘ. The base stations 200ₘ are connected to an upper node such as an access gateway 300 and the access gateway 300 is connected to a core network 400. Each of the mobile stations 100ₙ is in one of cells 50ₖ (50₁, 50₂, ..., 50ₖ, where k is an integer greater than 0) and communicates with the corresponding one of the base stations 200ₘ according to Evolved ULTRA and UTRAN.

Here, it is assumed that some of the mobile stations 100ₙ have established communication channels with the base stations 200ₘ and are in communications; and the other mobile stations 100ₙ have not established communication channels with the base stations 200ₘ and are not in communications.

The base stations 200ₘ transmit synchronization signals. Each of the mobile stations 100ₙ is located in one of the cells 50ₖ (50₁, 50₂, ..., 50ₖ,
where k is an integer greater than 0). When the mobile station 100ₙ is, for example, turned on or in the intermittent reception mode during communications, the mobile station 100ₙ performs a cell search based on the synchronization signals to find a cell that provides good radio communication quality for the mobile station 100ₙ. More specifically, the mobile station 100ₙ detects a symbol timing and a frame timing and detects cell-specific control information such as a cell ID (a scrambling code that is unique to a cell and generated from the cell ID) or a group of cell IDs (hereafter called a cell ID group) based on a synchronization signal.

A cell search may be performed when the mobile station 100ₙ is in communications as well as when the mobile station 100ₙ is not in communications. For example, the mobile station 100ₙ performs a cell search during communications to find a cell using the same frequency or to find a cell using a different frequency. The mobile station 100ₙ also performs a cell search when it is not in communications, for example, when the user equipment 100ₙ has just been turned on or is in the standby mode.

The base stations 200ₘ (200₁, 200₂, 200₃, ..., 200ₘ) have the same configuration and functions and are therefore called the base station 200, the base station 200ₘ, or the base stations 200ₘ in the descriptions below unless otherwise mentioned. The mobile stations 100ₙ (100₁, 100₂, 100₃, ..., 100ₙ) have the same configuration and functions and are therefore called the mobile station 100, the mobile station 100ₙ, or the mobile stations 100ₙ in the descriptions below unless otherwise mentioned. The cells 50ₖ (50₁, 50₂, 50₃, ..., 50ₖ) have the same configuration and functions and are therefore called the cell 50, the cell 50ₖ, or the cells 50ₖ in the descriptions below unless otherwise mentioned.

In the radio communication system 1000, orthogonal frequency division multiple access (OFDMA) is used as the downlink radio access method and single-carrier frequency division multiple access (SC-FDMA) is used as the uplink radio access method. In OFDMA, as described above, a frequency band is divided into narrow frequency bands (subcarriers) and data are transmitted on the subcarriers. In SC-FDMA, a frequency band is divided into multiple frequency bands and the frequency bands are allocated to different terminals for transmission in order to reduce interference between the terminals.

Communication channels used in Evolved UTRA and UTRAN are described below.

For downlink, a physical downlink shared channel (PDSCH) shared by the mobile stations 100ₙ and an LTE downlink control channel are used- In downlink, the LTE downlink control channel is used to report information on mobile stations to be mapped to the physical downlink shared channel, transport format information for the physical downlink shared channel, information on mobile stations to be mapped to a physical uplink shared channel, transport format information for the physical uplink shared channel, and acknowledgement information for the physical uplink shared channel; and the physical downlink shared channel is used to transmit user data.

Also in downlink, the base stations 200ₘ transmit synchronization signals used by the mobile stations 100ₙ to perform cell searches.

For uplink, a physical uplink shared channel (PUSCH) shared by the mobile stations 100ₙ and an LTE uplink control channel are used. There are two types of uplink control channels: the first is an uplink control channel to be time-division-multiplexed with the physical uplink shared channel and the second is an uplink control channel to be frequency-division-multiplexed with the physical uplink shared channel.

In uplink, the LTE uplink control channel is used to report downlink channel quality indicators (CQI) used for scheduling and adaptive modulation and coding (AMC) of the physical downlink shared channel and to report acknowledgement information (HARQ ACK information) for the physical downlink shared channel. Meanwhile, the physical uplink shared channel is used to transmit user data.

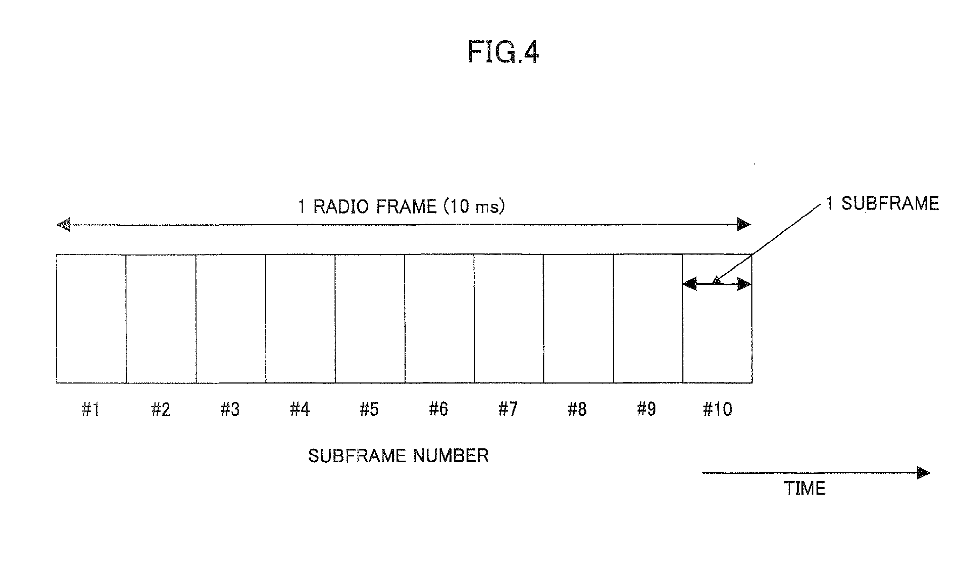

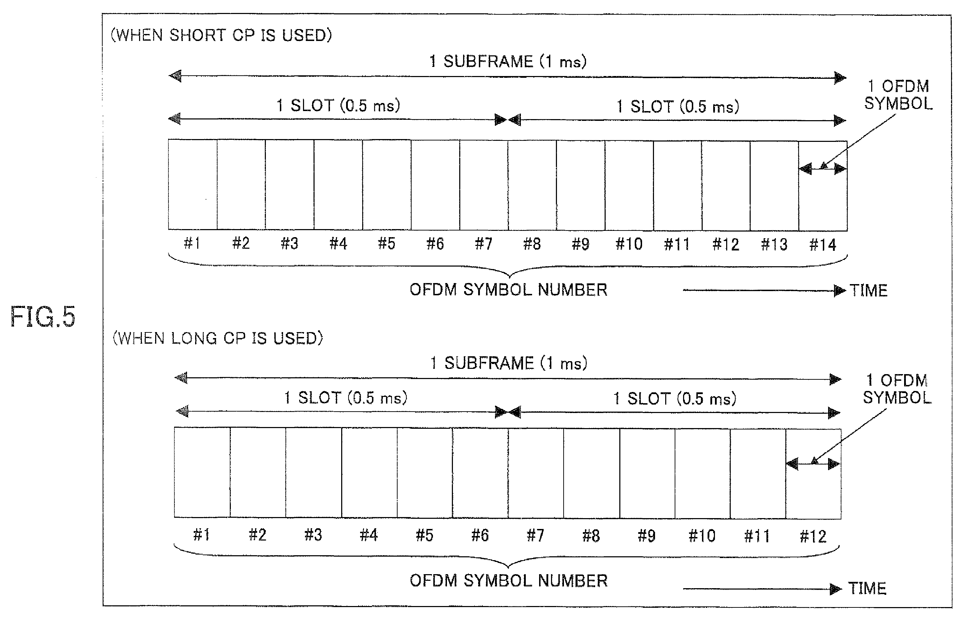

In downlink transmission, as shown in FIG. 4, one radio frame is 10 ms and includes 10 subframes. Also, as shown in FIG. 5, one subframe includes two slots, and each slot includes seven OFDM symbols when short CPs are used (upper part of FIG. 5) or six OFDM symbols when long CPs are used (lower part of FIG. 5).

### <BASE STATION: eNB>

Next, the base station 200ₘ according to an embodiment of the present invention is described with reference to PIG. 6.

The base station 200ₘ of this embodiment includes a transceiver antenna 202, an amplifier 204, a transceiver unit 206, a baseband signal processing unit 208, a call processing unit 210, and a transmission path interface 212.

Downlink packet data to be transmitted from the base station 200ₘ to the mobile station 100ₙ are sent from an upper node such as the access gateway 300 to the base station 200ₘ and input via the transmission path interface 212 to the baseband signal processing unit 208.

The baseband signal processing unit 208 performs, for the packet data, RLC layer transmission processing such as segmentation/concatenation and a transmission process in radio link control (RLC) retransmission control; a transmission process in MAC retransmission control (e.g., hybrid automatic repeat request (HARQ)); scheduling; selection of transport formats; channel coding; and inverse fast Fourier transform (IFFY) processing. The baseband signal processing unit 208 sends the processed packet data to the transceiver unit 206. Also, as described later, the baseband signal processing unit 208 generates a synchronization signal. The generated synchronization signal is multiplexed with the packet data and sent to the transceiver unit 206.

The transceiver unit 206 performs frequency conversion to convert a baseband signal output from the baseband signal processing unit 208 into a radio frequency signal. The radio frequency signal is amplified by the amplifier 204 and transmitted from the transceiver antenna 202. Here, the baseband signal includes the packet data and the synchronization signal described above.

Meanwhile, when a radio frequency signal including uplink data is transmitted from the mobile station 100ₙ to the base station 200ₘ, the radio frequency signal is received by the transceiver antenna 202, is amplified by the amplifier 204, and is frequency-converted by the transceiver unit 206 into a baseband signal. Then, the transceiver unit 206 inputs the baseband signal to the baseband signal processing unit 208.

The baseband signal processing unit 208 performs FFT processing, error correction decoding, a reception process in MAC retransmission control, and RLC layer reception processing on the input baseband signal and transmits the baseband signal via the transmission path interface 212 to the access gateway 300.

The call processing unit 210 performs status management and resource allocation for the base station 200ₘ.

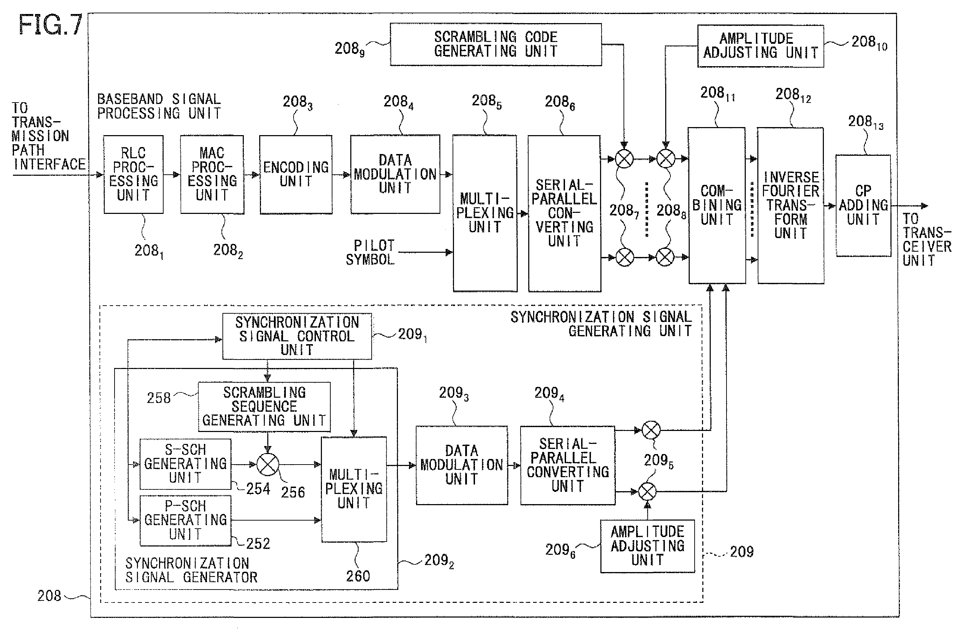

A configuration of the baseband signal processing unit 208 of this embodiment is described below with reference to FIG. 7. Embodiments of the present invention mainly relate to downlink. Therefore, only components related to downlink processing are shown in TIG. 7 and components related to uplink processing are omitted.

The baseband signal processing unit 208 includes an RLC processing unit 208₁, a medium access control (MAC) processing unit 208₂, an encoding unit 208₃, a data modulation unit 208₄, a multiplexing unit 208₅, a serial-parallel converting unit 208₆, multipliers 208₇, multipliers 208₈, a scrambling code generating unit 208₉, an amplitude adjusting unit 208₁₀, a combining unit 208₁₁, an IFFT (LOFT) unit 208₁₂, a CP adding unit 208₁₃, and a synchronization signal generating unit 209.

The RLC processing unit 208₁ performs RLC layer transmission processing such as segmentation/concatenation and a transmission process in RLC retransmission control on a transmission data sequence of downlink packet data received from the transmission path interface 212. The MAC processing unit 208₂ performs MAC layer transmission processing such as a transmission process in hybrid automatic repeat request (HARQ), scheduling, selection of transport formats, and allocation of frequency resources on the transmission data sequence of the downlink packet data. Then, the encoding unit 208₃ encodes the transmission data sequence and the data modulation unit 208₄ data-modulates the encoded transmission data sequence. The multiplexing unit 208₅ multiplexes the data-modulated transmission data sequence with a pilot symbol. Next, the serial-parallel converting unit 208₆ performs serial-parallel conversion on the transmission data sequence multiplexed with the pilot symbol to obtain a symbol sequence including N information symbols arranged along the frequency axis. Here, the pilot symbol is, for example, a downlink reference signal (DL-RS). The multipliers 208₇ (the number of which is N) multiply the corresponding N information symbols arranged along the frequency axis by a scrambling code, which is output from the scrambling code generating unit 208₉, in the frequency direction. Also, the multipliers 208₈ (the number of which is N) multiply the N information symbols multiplied by the scrambling code by an amplitude adjusting sequence value output from the amplitude adjusting unit 208₁₀ and output the multiplied information symbols to the combining unit 208₁₁, The combining unit 208₁₁ multiplexes the symbol sequence having a sequence length N and multiplied by the scrambling code and the amplitude adjusting sequence value with the synchronization signal generated by the synchronization signal generating unit 209 in one or more of N subcarriers

As described later, subframes and slots (subframe numbers and slot numbers) used to transmit the synchronization signal are determined by a synchronization signal control unit 209₁. In the subframes and slots where the synchronization signal is transmitted, the combining unit 208₁₁ combines the synchronization signal generated by the synchronization signal generating unit 209 with another signal (a symbol sequence obtained by multiplying downlink packet data by a scrambling code and an amplitude adjusting sequence value). Meanwhile, in subframes and slots where no synchronization signal is transmitted, the synchronization signal generated by the synchronization signal generating unit 209 is not multiplexed. In those subframes and slots, only the symbol sequence having a sequence length N and obtained by multiplying the downlink packet data by the scrambling code and the amplitude adjusting sequence value is input to the inverse Fourier transform unit 208₁₂. The subcarriers
where the synchronization signal is multiplexed are located, for example, in a frequency band including the center of the entire frequency band. The subcarriers
where the synchronization signal is multiplexed have a bandwidth of, for example, 1.25 MHz.

The inverse Fourier transform unit (IFFT) 208₁₂ converts the N symbols into an orthogonal multi-carrier signal. The CP adding unit 208₁₃ inserts a CP into the multi-carrier signal at every Fourier transform time. There are two types of CPs with different lengths (CP lengths) : a long CP and a short CP. One of the long CP and the short CP is selected for each cell.

A synchronization signal generation process of the synchronization signal generating unit 209 is described below. The synchronization signal includes a first synchronization signal (hereafter called a primary synchronization channel: P-SCH) and a second synchronization signal (hereafter called a secondary synchronization channel: S-SCH). The synchronization signal generating unit 209 includes a synchronization signal control unit 209₁, a synchronization signal generator 209₂, a data modulation unit 209₃, a serial-parallel converting unit 209₄, multipliers 209₅, and an amplitude adjusting unit 209₆. The synchronization signal generator 209₂ includes a P-SCH generating unit 252, an S-SCH generating unit 254, a multiplier 256, a scrambling sequence generating unit 258, and a multiplexing unit 260. The synchronization signal control unit 209₁ is connected to the P-SCH generating unit 252, the S-SCH generating unit 254, the scrambling sequence generating unit 258, and the multiplexing unit 260 of the synchronization signal generator 209₂.

The synchronization signal control unit 209₁ determines a sequence (sequence number) used for the P-SCH, a sequence (sequence number) used for the S-SCAR and subframes and slots (or subframe numbers and slot numbers) used to transmit the P-SCH and the S-SCH based on the cell ID or the cell ID group of a cell where the base station 200ₘ provides communications based on Evolved UTRA and UTRAN. The mobile station may be configured to identify a cell based on a signal pattern of a pilot signal, i.e., a reference signal, after identifying a cell ID group. In this case, the correspondence between signal patterns of the reference signal and cell IDs may be predefined. Alternatively, the mobile station may be configured to identify a cell based on demodulation and decoding results of the P-SCH and the S-SCH. In this case, the correspondence between P-SCH sequence numbers and cell ID information may be predefined. Different P-SCH sequences are selected, for example, for respective sectors. When, for example, a cell includes three sectors, a different P-SCH sequence is selected for each of the sectors from a set of three different sequences.

The synchronization signal control unit 209₁ reports the sequence number of the P-SCH to the P-SCH generating unit 252 and reports the sequence number of the S-SCH to the S-SCH generating unit 254. The synchronization signal control unit 209₁ also reports numbers indicating the subframes and the slots (subframe numbers and slot numbers) used to transmit the P-SCH and the S-SCH as synchronization signal transmission timing information to the multiplexing unit 260.

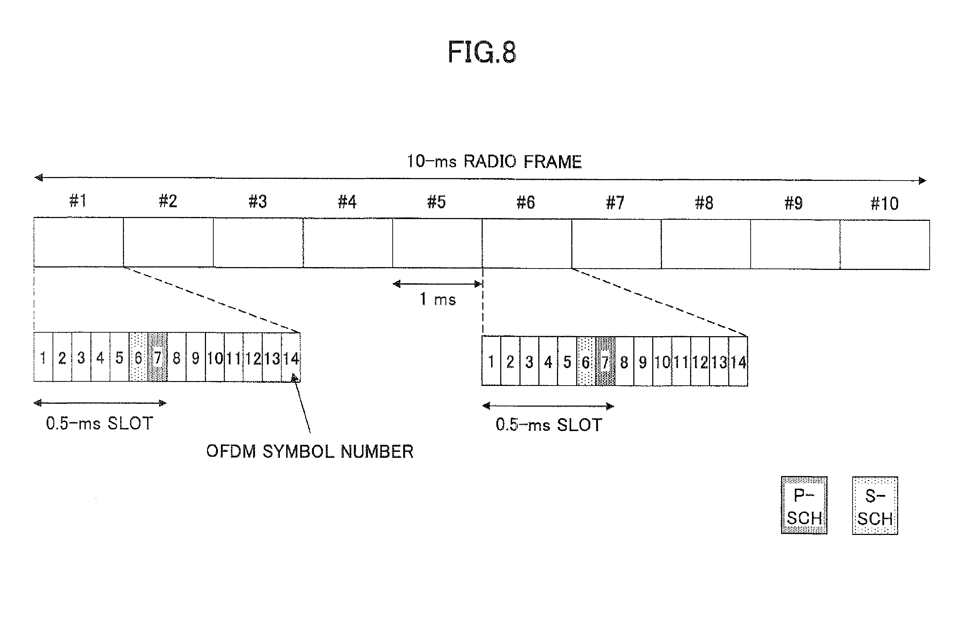

For example, in the radio communication system 1000, subframes and slots used to transmit the P-SCH and the S-SCH are defined as shown in FIG. 8. In this example, one of multiple (e.g., three) P-SCH sequences is selected and the synchronization signal is transmitted in subframe #1 and subframe #6. Also in this example, the P-SCH is mapped to the last OFDM symbol in each slot. This in turn enables the mobile station to demodulate the P-SCH regardless of whether the long CP or the short CP is used. This is because the timing of the sixth OFDM symbol that is the last OFDM symbol in a slot where the long CP is used matches the timing of the seventh OFDM symbol that is the last OFDM symbol in a slot where the short CP is used. In other words, the timings of the first and last symbols in a slot where the long CP is used are the same as those in a slot
where the short CP is used. Further, the correspondence between P-SCH sequence numbers and cell ID information may be predefined in the radio communication system 1000. With the correspondence between P-SCH sequence numbers and cell ID information predefined in the radio communication system 1000, the synchronization signal control unit 209₁ of the base station 200ₘ can determine a P-SCH sequence number based on the cell ID of a cell
where the base station 200ₘ provides communications based on Evolved UTRA and UTRAN.

Generally, a communication area provided by the base station 200ₘ is divided into two or more subareas called sectors. When the base station 200ₘ covers multiple sectors, the cell ID or the cell ID group may be used to identify an area including all of the sectors or to identify individual sectors. When the cell ID or the cell ID group is used to identify an area including all sectors of the base station 200ₘ, a combination of synchronization signal sequences and subframes and slots (subframe numbers and slot numbers) used to transmit the synchronization signal is defined for each base station 200ₘ. When the cell ID or the cell ID group is used to identify individual sectors of the base station 200ₘ, a combination of synchronization signal sequences and subframes and slots used to transmit the synchronization signal is defined for each sector of the base station 200ₘ.

As the P-SCH sequence, any one of the following sequences may be used: a constant amplitude zero autocorrelation (CAZAC) sequence such as a Zadoff-Chu sequence (see, for example, C. Chu, "Polyphase codes with good periodic correlation properties," IEEE Trans. Inform. Theory, vol. 11-18, pp. 531-532, July 1972); a Frank sequence (see, for example, R. L. Frank and S. A. Zadoff, "Phase shift pulse codes with good periodic correlation properties," IRE Trans. Inform. Theory, vol. IT-8, pp. 381-382, 1962); a Modulated Frank sequence (see, for example, R. L. Frank and S. A. Zadoff, "Phase shift pulse codes with good periodic correlation properties," IRE Trans. Inform. Theory, vol. IT-8, pp. 381-382, 1962); a Golay Complementary sequence (see, for example, M. J. E. Golay, "Complementary Series," IRE Trans. Inform. Theory, vol. 7, pp. 82-87, April 1961); a Double Repetitive Golay complementary sequence (see, for example, 3GPP, R1-062487, Hierarchical SCH signals suitable for both (FDD and TDD) modes of E-UTRA); and a pseudo noise (PN) sequence.

As the S-SCH sequence, any one of the following sequences may be used: a two-layered S-SCH sequence obtained by multiplying an orthogonal or non-orthogonal sequence by a non-orthogonal or orthogonal scrambling sequence (see, for example, 3GPP, R1-070146, S-SCH Sequence Design); an S-SCH sequence composed of multiple orthogonal or non-orthogonal sequences arranged alternately in the frequency domain; an S-SCH sequence obtained by multiplying multiple orthogonal or neon-orthogonal sequences by a non-orthogonal or orthogonal scrambling sequence; an S-SCH sequence composed of multiple orthogonal or non-orthogonal sequences arranged in consecutive subcarriers; and an S-SCH sequence composed of multiple orthogonal or non-orthogonal sequences arranged in consecutive subcarriers and multiplied by a non-orthogonal or orthogonal scrambling sequence. Examples of orthogonal sequences include a Malsh-Hadamard sequence, a phase-rotated orthogonal sequence, and an orthogonal M-sequence. Examples of non-orthogonal sequences include a CAZAC sequence such as a GCL sequence; a Golay sequence; a Golay complementary sequence; an M-sequence (see, for example, 3GPP, R1-072093, Details on SSC Sequence Design); and a PN sequence.

The P-SCH generating unit 252 and the S-SCH generating unit 254, respectively, generate a P-SCH sequence and an S-SCH sequence based on the synchronization signal sequence information and the synchronization signal transmission timing information reported from the synchronization signal control unit 209₁.

For example, when generating the S-SCH, the synchronization signal generator 209₂ may include cell-specific information in the S-SCH in a layered manner. The cell-specific information includes at least one of a cell. ID groups, a radio frame timing, and the number of transmitting antennas. Here, the radio communication system 1000 may be configured to report to the mobile station a part of layered information as prior information (e.g., neighboring cell information) for a cell search. For example, the prior information may include a cell ID group, a part of the cell ID group, a radio frame timing, the number of transmitting antennas, or any combination of them. The prior information makes it possible to reduce the number of sequences that the mobile station has to detect when performing a cell search.

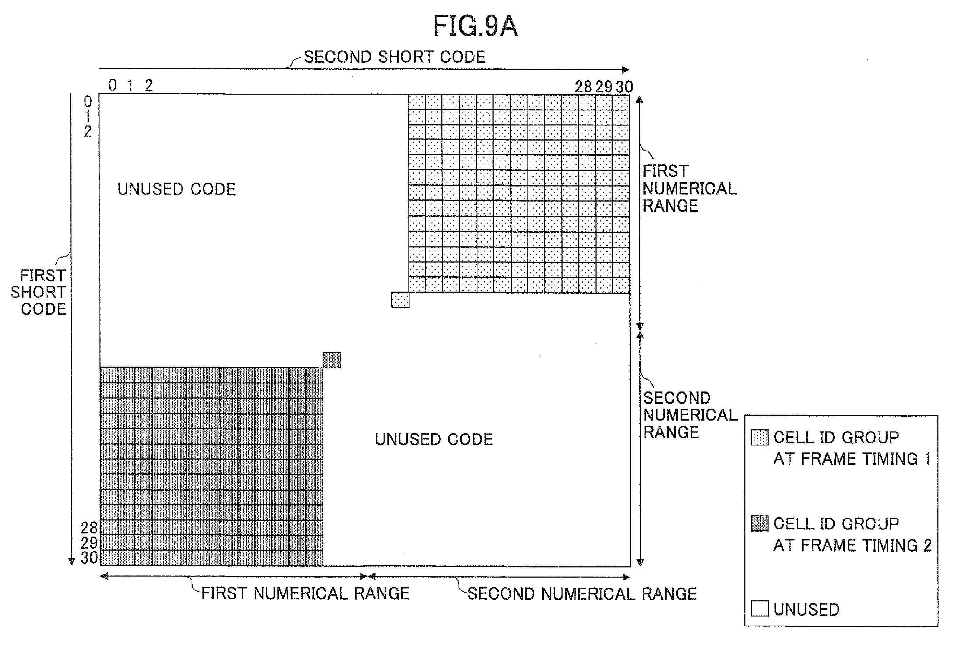

More particularly, a cell ID group may be represented by a combination of two or more sequences. FIG. 9A shows an example where a cell ID group is represented by a combination of two short codes with a sequence length of 31. In FIG. 9A, "first short code" on the vertical axis indicates sequence indexes of a first one of two short codes used for the S-SCH sequence; and "second short code" on the horizontal axis indicates sequence indexes of a second one of the two short codes. In this example, 31 sequence indexes are assigned to each of the first short code and the second short code. However, as described above, the number of sequence indexes assigned to each of the first short code and the second short code may be limited as needed.

As shown in FIG. 9A, a sequence index of the first short code used at (frame) timing #1 is selected from a first numerical range (0-13); and a sequence index of the second short code used at timing #1 is selected from a second numerical range (23-30). Meanwhile, a sequence index of the first short code used at timing #2 that is 5 ms after timing #1 is selected from the second numerical range (23-30); and a sequence index of the second short code used at timing #2 is selected from the first numerical range (0-13).

Selecting sequence indexes to be used at timings #1 and #2 from different numerical ranges makes it possible to reduce the number of candidates of the first and second short codes to be searched for and thereby makes it possible to reduce the time necessary for the search. Also with this method, as soon as a sequence index of the first short code is detected, it is possible to determine that the sequence index is used at timing #1.

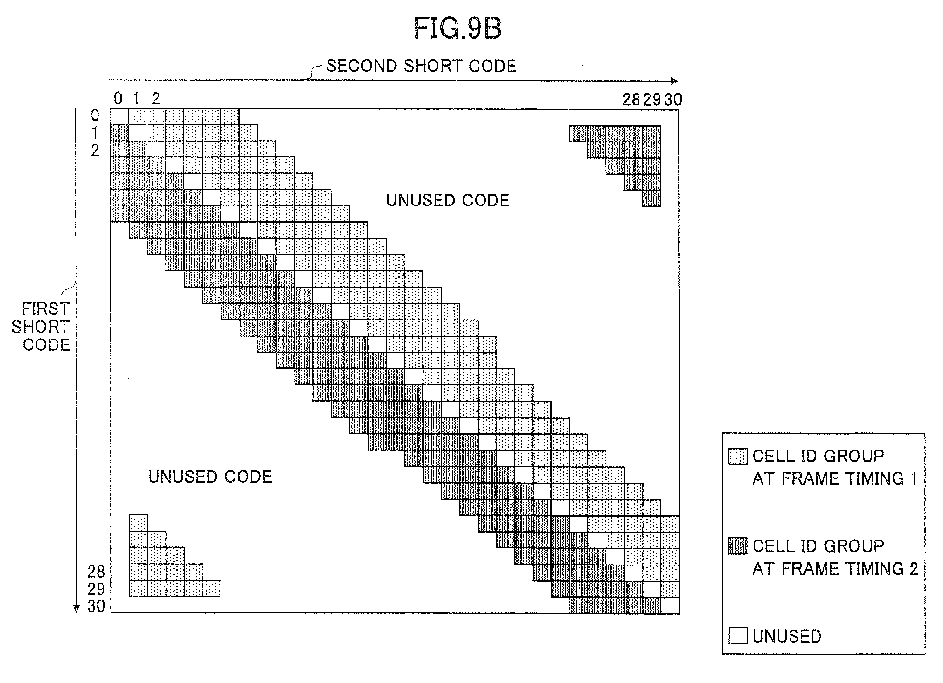

FIG. 9B is a drawing illustrating another method of determining the S-SCH sequence. In the example shown in FIG. 9B, sequence indexes of the first and second short codes are selected from the same numerical range (0-30). For descriptive purposes, a sequence index of the first short code is indicated by "m" and a sequence index of the second short code is indicated by "n". In FIG. 9B, a combination of sequence indexes m and n is selected to satisfy m-n≦Δ or n-m≦Δ. Here, m and n are integers between 0 and 30, and Δ is an integer less than or equal to 29. With this method, sequence indexes are selected from a numerical range wider than that in the method shown in FIG. 9A. Accordingly, this method increases the flexibility in selecting a combination of codes used for the secondary synchronization channel and is therefore preferable in terms of preventing collision of codes.

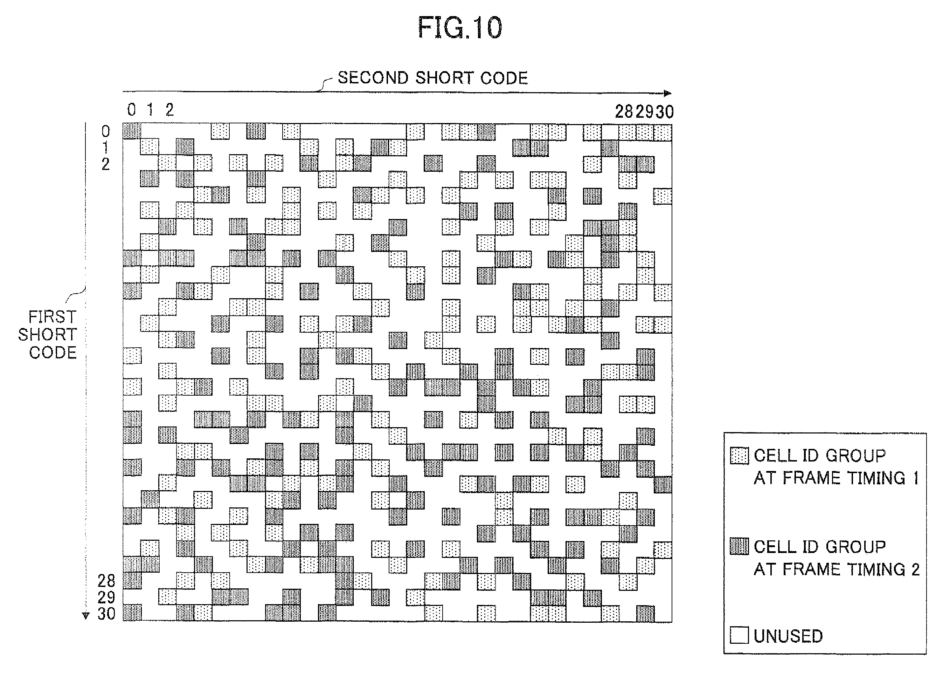

FIG. 10 is a drawing illustrating another method of determining the S-SCH sequence. Also in this method, sequence indexes of the first and second short codes are selected from the same numerical range (0-30). However, no simple rule as shown in FIGs- 9A and 9B is employed in thins method. In this method, sequence indexes of the first and second short codes are combined in various manners such that a same combination is not generated.

The P-SCH sequence generated by the P-SCH generating unit 252 is input to the multiplexing unit 260 and the S-SCH sequence generated by the S-SCH generating unit 254 is input to the multiplier 256. The synchronization signal control unit 209₁ inputs information indicating a scrambling sequence to the scrambling sequence generating unit 258. For example, the synchronization signal control unit 209₁ inputs information indicating a scrambling code common to all cells to the scrambling sequence generating unit 258. Based on the information indicating a scrambling sequence input from the synchronization signal control unit 209₁, the scrambling sequence generating unit 258 generates the scrambling sequence and inputs the generated scrambling sequence to the multiplier 256. The multiplier 256 multiplies the S-SCH by the scrambling sequence and inputs the multiplied S-SCH to the multiplexing unit 260. The length of the scrambling sequence may be determined depending on whether two short codes are scrambled (or spread) together or separately. Multiple scrambling sequences may be used to report, for example, system information for the S-SCH sequence such as a frame timing, a cell ID group, or the number of transmitting antennas. This makes it possible to reduce the peak-to-average power ratio (PAPR) of the S-SCH sequence, particularly in a 1.25 MHz system.

Here, if a neighboring cell (and/or another cell of the same base station) and a serving cell use the same S-SCH sequence, the detection accuracy of the S-SCH at the user equipment may be reduced because of the interference from the neighboring cell. This in turn increases the time necessary for a cell search and degrades the time characteristic of the cell search. To solve this problem by randomizing the interference from the neighboring cell, the synchronization signal control unit 209₁ is preferably configured to select a scrambling sequence unique to a cell and to input information indicating the selected scrambling sequence to the scrambling sequence generating unit 258. In this case, scrambling sequences or scrambling codes for the S-SCH may be associated with respective cells or respective base stations. Based on the information indicating a scrambling sequence input from the synchronization signal control unit 209₁, the scrambling sequence generating unit 258 generates the scrambling sequence and inputs the generated scrambling sequence to the multiplier 256. The scrambling sequence generating unit 258 may be configured to generate a scrambling sequence associated with the P-SCH sequence number, i.e., unique to the P-SCH sequence. Alternatively, the scrambling sequence generating unit 258 may be configured to generate a scrambling sequence unique to the sequence number of one of two short codes (see, for example, 3GPP, R1-072661, Scrambling Method for Two S-SCH Short Code). The multiplier 256 multiplies the S-SCH sequence by the scrambling sequence input from the scrambling sequence generating unit 258 and inputs the multiplied S-SCH sequence to the multiplexing unit 260. The length of the scrambling sequence may be determined depending on whether two short codes are scrambled together or separately. The scrambling sequence may be common to all cells, unique to each cell, unique to the P-SCH sequence, or unique to the sequence number of one of the two short codes. Also, multiple scrambling sequences may be used. For example, the multiplier 256 may be configured to multiply one of the two short codes by a scrambling sequence common to all cells and to multiply the other one of the two short codes by a scrambling sequence unique to the P-SCH sequence. As another example, the multiplier 256 may be configured to multiply a first one of the two short codes by a scrambling sequence unique to the P-SCH sequence and to multiply a second one of the two short codes by a scrambling sequence unique to the sequence number of the first one of the two short codes. Multiple scrambling sequences may be used to report, for example, system information for the S-SCH sequence such as a frame timing, a cell ID group, or the number of transmitting antennas. The multiplexing unit 260 multiplexes the P-SCH sequence and the S-SCH sequence multiplied by the scrambling sequence and inputs the multiplexed synchronization signal sequence to the data modulation unit 209₃.

The data modulation unit 209₃ data-modulates the synchronization signal sequence generated by the synchronization signal generator 209₂. Next, the serial-parallel converting unit 209₄ performs serial-parallel conversion on the data-modulated synchronization signal sequence to obtain a symbol sequence including N_{SCH} symbols arranged along the frequency axis. Then, the multipliers 209₅ multiply the N_{SCH} symbols by an amplitude adjusting sequence value input from the amplitude adjusting unit 209₆ and output the multiplier symbols to the combining unit 208₁₁.

### <USER EQUIPMENT: USE>

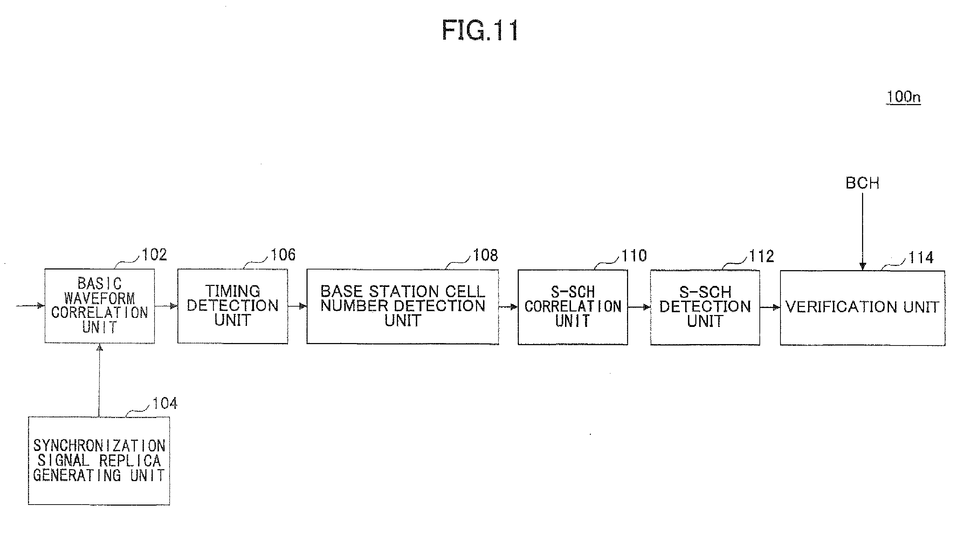

Next, the mobile station (user equipment) 100ₙ of this embodiment is described with reference to FIG. 11.

The mobile station 100ₙ includes a basic waveform correlation unit 102, a synchronization signal replica generating unit 104, a timing detection unit 106, a base station cell number detection unit 108, an S-SCH correlation unit 110, an S-SCH detection unit 112, and a verification unit 114. A broadcast channel (BCH) is input to the verification unit 114.

In the mobile station 100ₙ, a multi-carrier signal received via an antenna is input to the basic waveform correlation unit 102. The synchronization signal replica generating unit 104 generates a synchronization signal replica with a predetermined basic waveform and inputs the generated synchronization signal replica to the basic waveform correlation unit 102. For example, the synchronization signal replica generating unit 104 generates a synchronization signal replica including three different sequences and inputs the generated synchronization signal replica to the basic waveform correlation unit 102. The basic waveform correlation unit 102, under the control of a control unit, detects correlation between the received multi-carrier signal and the synchronization signal replica including three different sequences input from the synchronization signal replica generating unit 104. Then, the basic waveform correlation unit 102 outputs a correlation value between the received multi-carrier signal and the synchronization signal replica to the timing detection unit 106.

The timing detection unit 106 detects a P-SCH timing and a P-SCH sequence number based on the correlation value input from the basic waveform correlation unit 102, and inputs the P-SCH timing and the P-SCH sequence number to the base station cell number detection unit 108.

The base station cell number detection unit 108 detects the cell number of a cell where the mobile station 100ₙ is located based on the P-SCH sequence number input from the timing detection unit 106. Then, the base station cell number detection unit 108 inputs the detected cell number together with an S-SCH sequence multiplied by a scrambling sequence to the S-SCH correlation unit 110.

The S-SCH correlation unit 110 determines the correlation between a cell ID group and the S-SCH sequence multiplied by the scrambling sequence input from the base station cell number detection unit 108. Cells of the same base station belong to the same cell ID group. When an orthogonal S-SCH sequence is multiplied by a scrambling sequence unique to the P-SCH, it is possible to determine the cell number of a cell of the base station by detecting the P-SCH sequence. The S-SCH correlation unit 110 determines the correlation between a cell ID group and the S-SCH sequence multiplied by the scrambling sequence in the frequency axis direction.

Next, the S-SCH detection unit 112 detects the S-SCH based on the correlation determined by the S-SCH correlation unit 110. For example, the S-SCH detection unit 112 detects the S-SCH from multiple S-SCH sequences determined by cell ID groups and radio frame timings. Assuming that there are 170 cell ID groups and two radio frame timings, the S-SCH detection unit 112 detects the S-SCH from 170 x 2=340 S-SCHs.

Meanwhile, when the cell number of a cell of the base station identified based on the detected P-SOH sequence is not taken into account, the S-SCH detection unit 112 may be configured to detect the S-SCH from multiple S-SCH sequences determined by cell ID groups, radio frame timings, and scrambling sequences unique to P-SCHs (P-SCH specific scrambling sequences). For example, assuming that there are 170 cell ID groups, two radio frame timings, and three P-SCH specific scrambling sequences, the S-SCH detection unit 112 detects the S-SCH from 170 x 2 x 3=1020 S-SCHs. Further, the S-SCH detection unit 112 may be configured to detect the S--SCH from multiple S-SCH sequences determined by second-short-code scrambling sequences unique to first short codes. Assuming that there are multiple S-SCH sequences determined by X second-short-code scrambling sequences unique to first short codes (where X indicates an integer between 2 and 31), the S-SCH detection unit 112 detects the S-SCH from 170 x 2 x 3 x X=(1020 x X) S-SCHs.

After detecting the P-SCH sequence and the S-SCH sequence, the mobile station 100ₙ detects a cell ID group. After detecting the cell ID group, the mobile station 100ₙ receives broadcast information such as a primary broadcast channel using a scrambling code associated with a cell ID. The received broadcast channel is input to the verification unit 114.

The verification unit 114 performs a cyclic redundancy check (CRC) on the input broadcast channel to detect an error and determines whether the cell search has been successful based on the error detection result.
If the verification unit 114 determines that the cell search has been successful, the mobile station 100ₙ continues communications. If the verification unit 114 determines that the cell search has failed, the mobile station 100ₙ may repeat the cell search process from a first step or a second step. The first step of the cell search process indicates a step, performed by the basic waveform correlation unit 102, of detecting the correlation between the received multi-carrier signal and the synchronization signal replica including three different sequences which is input from the synchronization signal replica generating unit 104. The second step of the cell search process indicates a step, performed by the S-SCH correlation unit 110, of determining the correlation between the cell ID group and the S-SCH sequence multiplied by the scrambling sequence input from the base station cell number detection unit 108.

An exemplary cell search process is described below. A cell search is performed based on the P-SCH and the S-SCH included in a downlink signal. More specifically, a cell search is performed based on a P-SCH sequence and an S-SCH sequence defined in the radio communication system 1000 described above. The mobile station 100ₙ detects the P-SCH sequence and the S-SCH sequence and thereby detects a cell ID or a cell ID group. After detecting the cell ID, the mobile station 100ₙ receives broadcast information such as a primary broadcast channel using a scrambling code associated with the cell ID, and terminates the cell search process. P-SCH sequences and synchronization signal transmission patterns defined in the radio communication system 1000 are described above in relation to the base station 200ₘ and therefore their descriptions are omitted here.

If, for example, a synchronization signal transmission pattern is defined as shown in FIG. 8 and P-SCH sequence numbers are associated with cell ID information in the radio communication system 1000, the timing detection unit 106 detects a synchronization channel timing and a P-SCH sequence number. Also, the S-SCH detection unit 112 can detect cell-specific information by, for example, descrambling the S-SCH sequence multiplied by the scrambling sequence and detecting an information item in the S-SCH.

### <TRANSMISSION AND RECEPTION OF SYNCHRONIZATION CHANNEL>

Next, a synchronization channel transmission method of this embodiment is described.

The S-SCH generating unit 254 selects plural synchronization signal sequences. For example, the S-SCH generating unit 254 selects, for each of radio frame timings #1 and #2, a sequence (first layer cell 10 group indicator #1) having a sequence length of 32 and including 16 short codes and a sequence (second layer cell ID group indicator #2) having a sequence length of 32 and including 16 short codes. Here, the S-SCH generating unit 254 may be configured to also generate prior information to be reported to the mobile station in advance. For example, the S-SCH generating unit 254 may be configured to generate prior information indicating a first layer cell ID group constituting a part of cell ID group identification information and to transmit the generated prior information.

Next, the S-SCH generating unit 254 generates a secondary synchronization channel based on the selected synchronization signal sequences. For example, the S-SCH generating unit 254 generates a secondary synchronization channel indicating a first layer cell ID group constituting a part of cell 10 group identification information and a second layer cell ID group constituting another part of the cell ID group identification information. The synchronization signal control unit 209₁ inputs information indicating a scrambling sequence to the scrambling sequence generating unit 258. For example, the synchronization signal control unit 209₁ inputs information indicating a scrambling code common to all cells to the scrambling sequence generating unit 258. Alternatively, the synchronization signal control unit 209₁ may be configured to input information indicating multiple scrambling codes to the scrambling sequence generating unit 258. The secondary synchronization channel is input to the multiplier 256, multiplied at the multiplier 256 by the scrambling sequence generated by the scrambling sequence generating unit 258, and transmitted to the mobile station.

Then, the mobile station detects cell-specific information based on the prior information and the secondary synchronization channel.

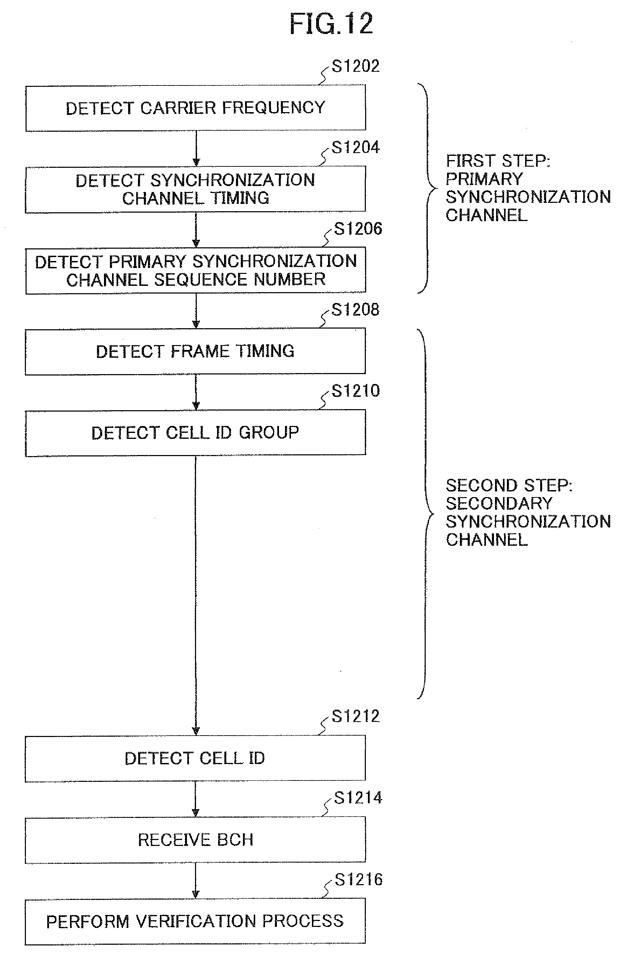

Next, a cell search method and a verification method in the radio communication system 1000 of this embodiment are described with reference to FIG. 12.

In a first step, the mobile station detects the correlation between a primary synchronization channel sequence and a received signal and thereby determines the carrier frequency and the timing of the primary synchronization channel (S1202, S1204). For example, the mobile station detects the correlation between a received multi-carrier signal and a synchronization signal replica including three different sequences, and thereby detects a primary synchronization channel sequence number (step S1206).

Once the symbol timing, the carrier frequency, and the primary synchronization channel sequence number of the primary synchronization channel are determined, it is possible to determine the reception timing and the carrier frequency of the secondary synchronization channel.. The mobile station descrambles the secondary synchronization channel multiplied by the scrambling sequence.

In a second step, the mobile station detects a radio frame timing based on a cell-specific secondary synchronization channel sequence used for the secondary synchronization channel (S1208). Typically, plural (e.g., two) synchronization channels are arranged in each radio frame. Therefore, the frame timing is determined after the timings of the synchronization channels are determined. The mobile station also detects a cell ID group based on the cell-specific secondary synchronization channel sequence (S1210).

Here, it is possible to reduce the number of candidates of cell-specific information that have to be detected and improve the detection accuracy by reporting to the mobile station a part or the whole of the cell ID group in advance as prior information. This in turn makes it possible to improve the communication quality. The prior information may instead include a radio frame timing or the number of transmitting antennas.

When the base station has multiple transmitting antennas, the base station may be configured to report the number of transmitting antennas via the secondary synchronization channel to the mobile station, and the mobile station may be configured to detect the number of transmitting antennas (the number of antennas in multiple input multiple output (MIMO)) in the second step. For example, the mobile station detects the number of transmitting antennas used by the base station to transmit a broadcast channel.

Next, the mobile station detects a cell ID based on the cell ID group detected in the second step and the primary synchronization channel sequence number detected in the first step (S1212).

After detecting the cell ID, the mobile station receives broadcast information such as a primary broadcast channel using a scrambling code associated with the cell ID (S1214).

Then, the mobile station performs a cyclic redundancy check (CRC) on the received broadcast channel to detect an error and determines whether the cell search has been successful based on the error detection result (S1216). If the cell search has been successful, the mobile station continues communications. If the cell search has failed, the mobile station may repeat the cell search process from the first step or the second step.

Thus, this embodiment makes it possible to reduce occurrences of detection failures and false detections in a cell search.

### «SECOND EMBODIMENT»

Next, a mobile station (user equipment) 100ₙ according to a second embodiment of the present invention is described.

The mobile station 100ₙ of this embodiment is different from the mobile station 100ₙ described with reference to FIG. 11 in that the verification unit 114 does not receive the broadcast channel.

The verification unit 114 of this embodiment determines whether the cell search has been successful based on correlation values input from the S-SCH detection unit 112. For example, the verification unit 114, based on correlation values of detected S-SCHs, obtains the ratio (evaluation value) of the highest correlation value to an average of correlation values other than the highest correlation value. If the evaluation value is greater than or equal to a predetermined threshold, the verification unit 114 determines that the cell search has been successful; and if the evaluation value is less than the threshold, the verification unit 114 determines that the cell search has failed. The threshold is determined based on a correlation value in a case where a cell ID group indicating a group of cell IDs matches plural secondary synchronization channel sequences determined based on radio frame timings and a correlation value in a case
where the cell ID group does not match the secondary synchronization channel sequences. If the cell search has been successful, the mobile station continues communications. If the cell search has failed, the mobile station may repeat the cell search process from the first step or the second step.

Here, the range of S-SCHs to be verified is described.

For example, the verification unit 114 determines whether the cell search has been successful based on correlation values of multiple S-SCH sequences determined based on cell ID groups and radio frame timings. Assuming that there are 170 cell ID groups and two radio frame timings, the verification unit 114 determines whether the cell search has been successful based on 170 x 2=340 correlation values. Meanwhile, when the cell number of a cell of the base station determined based on the detected P-SCH sequence is not taken into account, the verification unit 114 may be configured to determine whether the cell search has been successful based on multiple correlation values determined based on cell ID groups, radio frame timings, and P-SCH specific scrambling sequences. For example, assuming that there are 170 cell ID groups, two radio frame timings, and three P-SCH specific scrambling sequences, the verification unit 114 determines whether the cell search has been successful based on 170 x 2 x 3=1020 correlation values. Further, the verification unit 114 may be configured to determine whether the cell search has been successful based on multiple correlation values determined based on second-short-code scrambling sequences unique to first short codes. Assuming that there are multiple S-SCH sequences determined by X second-short-code scrambling sequences unique to first short codes (where X indicates an integer between 2 and 31), the verification unit 114 determines whether the cell search has been successful based on 170 x 2 x 3 x X=(1020 x X) correlation values.

For example, the verification unit 114 obtains, based on correlation values of detected S-SCHs, the ratio(s) (evaluation value(s)) of the highest correlation value to upper (or lower) correlation values, i.e., a certain number of correlation values from the top (or bottom) excluding the highest correlation value. If the evaluation value(s) is greater than or equal to a predetermined threshold, the verification unit 114 determines that the cell search has been successful; and if the evaluation value(s) is less than the threshold, the verification unit 114 determines that the cell search has failed. Also in this case, the range of S-SCHs to be verified is the same as described above.

Alternatively, the verification unit 114 may be configured to obtain, based on correlation values of detected S-SCHs, the ratio (evaluation value) of the highest correlation value to an average of upper (lower) correlation values, i.e., an average of a certain number of correlation values from the top (or bottom) excluding the highest correlation value. If the evaluation value is greater than or equal to a predetermined threshold, the verification unit 114 determines that the cell search has been successful; and if the evaluation value is less than the threshold, the verification unit 114 determines that the cell search has failed. Also in this case, the range of S-SCHs to be verified is the same as described above.

Also, the verification unit 114 may be configured to obtain, based on correlation values of detected S-SCHs, the ratio(s) (evaluation value(s)) of the highest correlation value to correlation values other than upper (or lower) correlation values, i.e., correlation values other than a certain number of correlation values from the top (or bottom) and excluding the highest correlation value. If the evaluation value(s) is greater than or equal to a predetermined threshold, the verification unit 114 determines that the cell search has been successful; and if the evaluation value(s) is less than the threshold, the verification unit 114 determines that the cell search has failed. Also in this case, the range of S-SCHs to be verified is the same as described above.

Further, the verification unit 114 may be configured to obtain, based on correlation values of detected S-SCHs, the ratio (evaluation value) of the highest correlation value to an average of correlation values other than upper (or lower) correlation values, i.e., an average of correlation values other than a certain number of correlation values from the top (or bottom) and excluding the highest correlation value. If the evaluation value is greater than or equal to a predetermined threshold, the verification unit 114 determines that the cell search has been successful; and if the evaluation value is less than the threshold, the verification unit 114 determines that the cell search has failed. Also in this case, the range of S-SCHs to be verified is the same as described above.

As still another configuration, the verification unit 114 may be configured to obtain the ratio (evaluation value) of the highest correlation value to correlation values (or an average of the correlation values) that are selected based, for example, on neighboring cell information. If the evaluation value is greater than or equal to a predetermined threshold, the verification unit 114 determines that the cell search has been successful; and if the evaluation value is less than the threshold, the verification unit 114 determines that the cell search has failed.

Next, a cell search method and a verification method in the radio communication system 1000 of this embodiment are described.

The cell search method and the verification method of this embodiment are different from those of FIG. 12 in that the reception of a broadcast channel (BCH) in step S1214 is not performed.

In a verification process in step S1216 of this embodiment, whether the cell search has been successful is determined based on detection results of S-SCHs as described above. For example, the ratio (evaluation value) of the highest correlation value to an average of correlation values other than the highest correlation value is obtained. If the evaluation value is greater than or equal to a predetermined threshold, it is determined that the cell search has been successful; and if the evaluation value is less than the threshold, it is determined that the cell search has failed. If the cell search has been successful, communications are continued. If the cell search has failed, the cell search process is repeated from the first step or the second step.

Thus, this embodiment makes it possible to reduce occurrences of detection failures and false detections in a cell search.

### <<THIRD EMBODIMENT>>

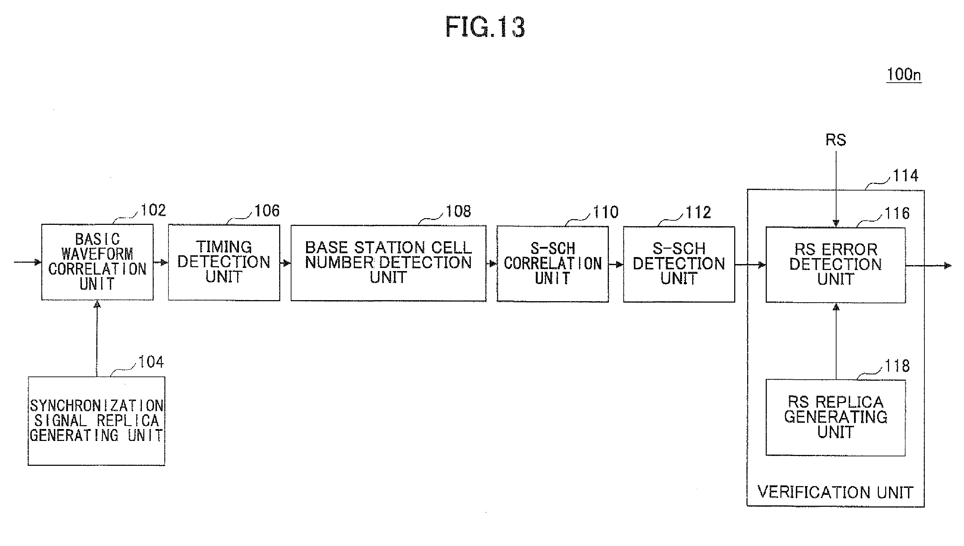

A mobile station (user equipment) 100ₙ according to a third embodiment of the present invention is described with reference to FIG. 13.

The mobile station 100ₙ of this embodiment is different from the mobile station 100ₙ described with reference to FIG. 11 in the configuration of the verification unit 114. The verification unit 114 of the mobile station 100ₙ of this embodiment includes a reference signal (RS) error detection unit 116 and a reference signal (RS) replica generating unit 118. A received reference signal is input to the RS error detection unit 116.

After detecting a cell ID, the mobile station 100ₙ receives the reference signal (pilot signal) based on the detected cell ID.

The RS replica generating unit 118 generates a reference signal replica corresponding to the cell ID detected by the S-SCH detection unit 112. Here, it is assumed that signal patterns of the reference signal are associated with cell IDs.

The RS error detection unit 116 obtains a cross-correlation between the input reference signal and the reference signal replica input from the RS replica generating unit 118, and determines whether the cell search has been successful based on the obtained cross-correlation. For example, the RS error detection unit 116 determines that the cell search has been successful if an error rate obtained from the cross-correlation is less than or equal to a predetermined threshold and determines that the cell search has failed if the error rate is greater than the threshold. If the cell search has been successful, the mobile station continues communications. If the cell search has failed, the mobile station may repeat the cell search process from the first step or the second step.

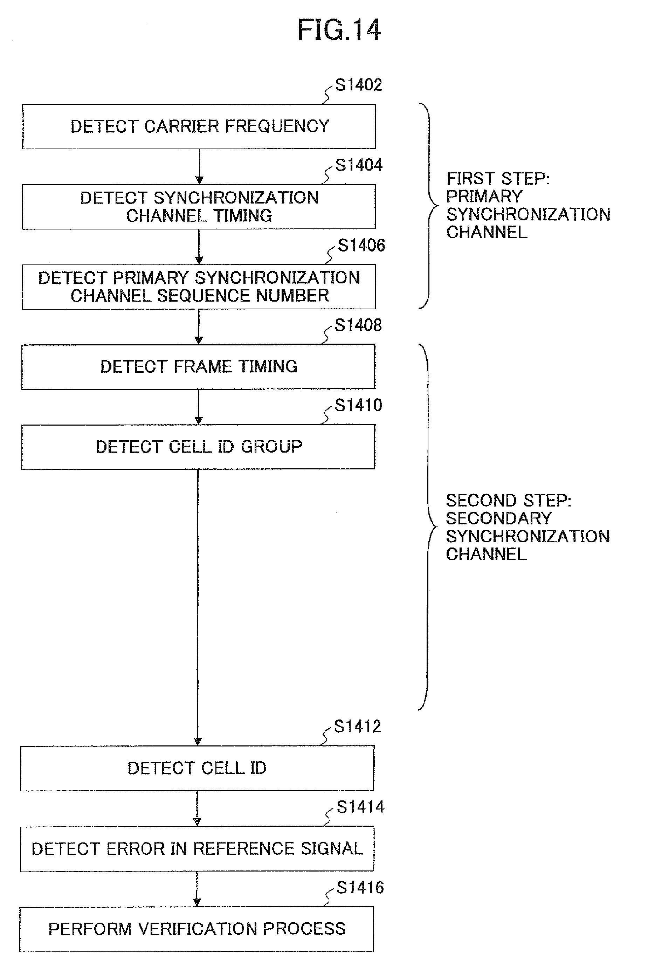

Next, a cell search method and a verification method in the radio communication system 1000 of this embodiment are described with reference to FIG. 14.

The cell search method and the verification method of this embodiment are different from those of FIG. 12 in that the step of receiving a broadcast channel (S1214) is replaced with a step of detecting an error in a reference signal (S1414).

The mobile station 100ₙ receives a reference signal (pilot signal) based on a cell ID detected in step S1412. Also, the mobile station 100ₙ generates a reference signal replica corresponding to the cell ID detected in step S1412.

Next, the mobile station 100ₙ obtains the cross-correlation between the received reference signal and the generated reference signal replica and thereby detects an error in the received reference signal (S1414).

Then, the mobile station 100ₙ determines whether the cell search has been successful based on the error detection result in step S1414 (S1416). For example, the mobile station 100ₙ determines that the cell search has been successful if an error rate obtained from the cross-correlation is less than or equal to a predetermined threshold and determines that the cell search has failed if the error rate is greater than the threshold.

If the cell search has been successful, the mobile station continues communications. If the cell search has failed, the mobile station may repeat the cell search process from the first step or the second step.

Thus, this embodiment makes it possible to reduce occurrences of detection failures and false detections in a cell search.

### <<FOURTH EMBODIMENT>>

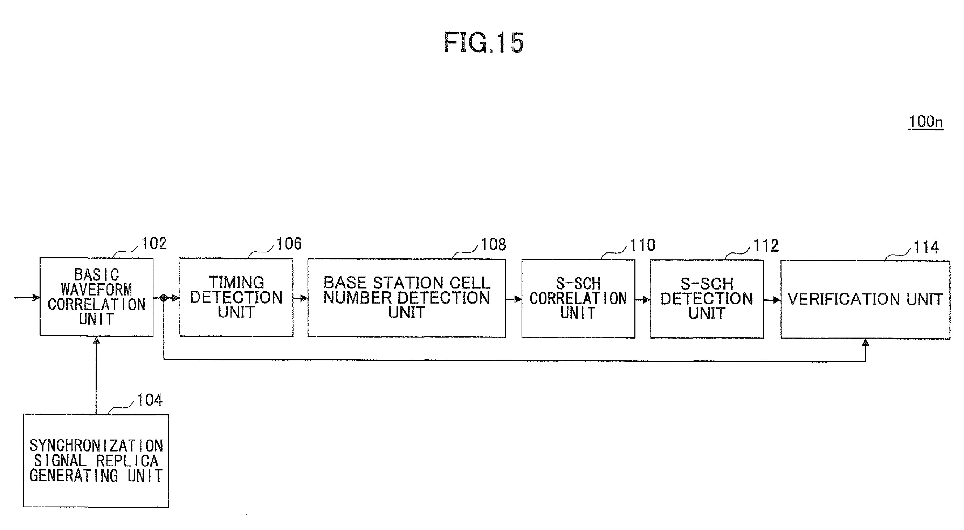

A mobile station (user equipment) 100ₙ according to a fourth embodiment of the present invention is described with reference to FIG. 15.

The mobile station 100ₙ of this embodiment is different from the mobile station 100ₙ described with reference to FIG. 11 in that the verification unit 114 receives an output signal from the basis waveform correlation unit 102 instead of a broadcast channel.

The verification unit 114 of this embodiment determines whether the cell search has been successful based on a correlation value input from the basic waveform correlation unit 102. For example, the verification unit 114 obtains, based on correlation detection results of three P-SCH sequences, the ratio(s) (evaluation value(s)) of the highest correlation value to correlation values other than the highest correlation value. If the evaluation value(s) is greater than or equal to a predetermined threshold, the verification unit 114 determines that the cell search has been successful; and if the evaluation value(s) is less than the threshold, the verification unit 114 determines that the cell search has failed. If the cell search has been successful, the mobile station continues communications. If the cell search has failed, the mobile station may repeat the cell search process from the first step or the second step.

### <<FIFTH EMBODIMENT>>

A mobile station 100ₙ according to a fifth embodiment of the present invention is described.

The mobile station 100ₙ of this embodiment is different from the mobile station 100ₙ of the above embodiments in that the verification unit 114 receives a search condition signal. The search condition signal includes at least one of cell search information, base station operation information, cell search step information, number-of-cell-search-tries information, received SINR information, the maximum Doppler frequency, delay spread information, and neighboring cell list information. The cell search information includes information indicating an initial cell search or a neighboring cell search. The base station operation information includes information vindicating whether base stations are synchronized (inter-base-station synchronous system) or not synchronized (inter-base-station asynchronous system).

The verification unit 114 starts a verification process based on the receive search condition signal.

Also, the verification unit 114 may be configured to select and perform one of the verification processes described above based on the received search condition signal. In this case, the verification unit 114 can perform at least two of the verification processes described above. Alternatively, the verification unit 114 may be configured to perform all of the verification processes described above.

### <<SIXTH EMBODIMENT>>

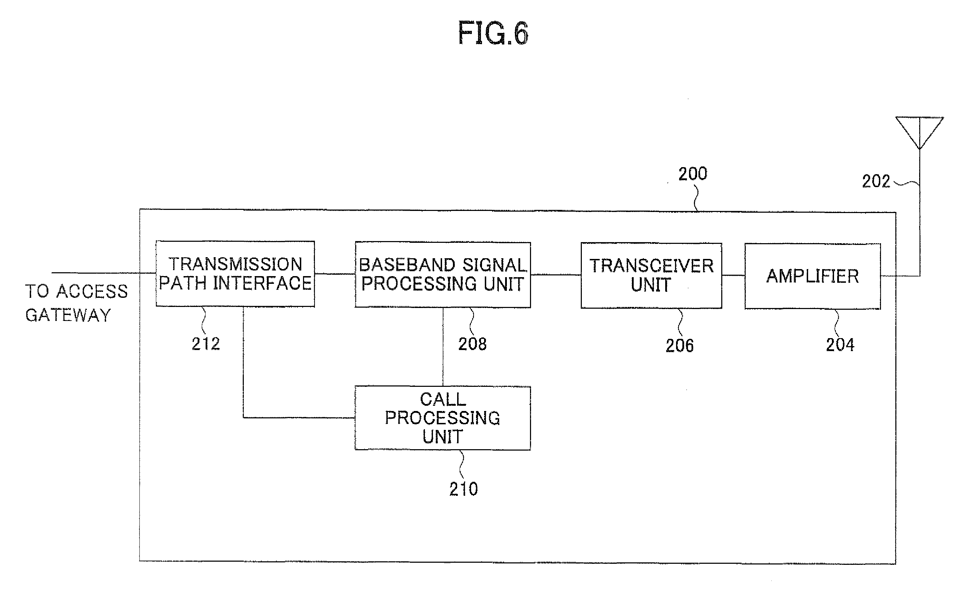

Next, a radio communication system including a base station and a mobile station according to a sixth embodiment of the present invention is described. The configurations of the radio communication system, the base station, and the mobile station of this embodiment are substantially the same as those described with reference to FIGs. 3, 6, 7, 11, 13, and 15.

In a base station 200 of this embodiment, the synchronization signal control unit 209₁ generates information indicating a scrambling sequence unique to a P-SCH sequence (P-SCH specific scrambling sequence) based on the P-SCH sequences number and inputs the information to the scrambling sequence generating unit 258. Based on the information indicating a scrambling sequence input from the synchronization signal control unit 209₁, the scrambling sequence generating unit 258 generates the scrambling sequence and inputs the generated scrambling sequence to the multiplier 256. The multiplier 256 multiplies the S-SCH sequence by the P-SCH specific scrambling sequence and inputs the multiplied S-SCH sequence to the multiplexing unit 260. In this embodiment, P-SCH sequence numbers and scrambling sequence numbers are explicitly associated with each other in advance. Thus, this embodiment is different from the first through fifth embodiments in that P-SCH sequence numbers and scrambling sequence numbers are explicitly associated with each other. Since different P-SCH sequences are selected for respective sectors, the S-SCH is multiplied by different scrambling sequences. When, for example, a cell includes three sectors, the P-SCH sequence for each of the sectors is selected from a set of three different sequences. Accordingly, the scrambling sequence used to multiply the S-SCH sequence is selected from a set of three different scrambling sequences.

The timing detection unit 106 of the mobile station 100 detects a P-SCH timing and a P-SCH sequence number based on a correlation value obtained by the basic waveform correlation unit 102. After the P-SCH sequence number is detected, the S-SCH sequence multiplied by the P-SCH specific scrambling sequence is descrambled. Then, the S-SCH detection unit 112 detects an S-SCH based on the detected P-SCH timing and using the P-SCH as a reference signal.

According to a cell search method and a verification method of this embodiment, a primary synchronization channel sequence number is detected in step S1206 or S1406 described above. Based on the primary synchronization channel sequence number, the P-SCH specific scrambling sequence used to multiply the S-SCH is determined. Then, the S-SCH multiplied by the P-SCH specific scrambling sequence is descrambled. After that, step S1203 or S1408 is performed.

Even when a neighboring cell (and/or another cell of the same base station) and a serving cell use the same S-SCH sequence, this method makes it possible to randomize the interference from the neighboring cell and thereby to improve the detection accuracy of the S-SCH. This in turn makes it possible to reduce the time necessary for a cell search and to improve the time characteristic of the cell search.

In a case where a channel estimate is obtained based on the P-SCH sequence and used to detect the S-SCH, the above method makes it possible to perform channel estimation taking into account the channel conditions of each cell and thereby to improve the accuracy of channel estimation. Improved accuracy in channel estimation, in turn, makes it possible to improve the detection accuracy of the S-SCH.

In this embodiment, the S-SCH sequence is multiplied by a P-SCH specific scrambling sequence. Also, different from the first through fifth embodiments, the correspondence between P-SCH sequences and scrambling sequences is predefined and known to the mobile station. In the initial step (the first step) of a cell search, the mobile station detects a P-SCH sequence number in addition to an SCH symbol timing. Since the P-SCH sequence number is associated one-to-one with a scrambling sequence (number) used to multiply the S-SCH, compared with the first embodiment, the mobile station can more quickly determine the scrambling sequence number based on the detected P-SCH sequence number. Thus, this embodiment eliminates the need to detect multiple (e.g., three) scrambling sequence numbers used for the S-SCH. In other words, this embodiment makes it possible to use three scrambling sequences for S-SCHs without increasing the computational load in detecting an S-SCH sequence.

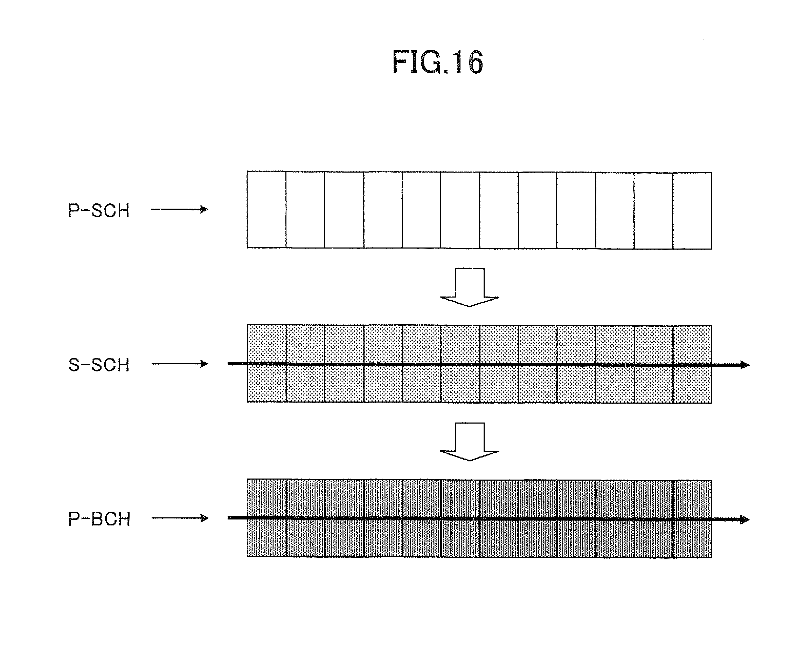

Further, this embodiment makes it possible to use 510 scrambling sequences for primary broadcast channels (P-BCH) without increasing the computational load in detecting a P-BCH. The above advantages of this embodiment are described with reference to FIG. 16. As described above, the P-SCH is associated with one of three scrambling sequences (P-SCH specific scrambling sequences) and is not scrambled. The S-SCH is scrambled, for example, by one of three P-SCH specific scrambling sequences (or codes). The P-BCH is scrambled, for example, by one of 510 cell-specific scrambling sequences (or codes). The S-SCH sequence includes orthogonal sequences, for example, two short codes, and is used to report one of 170 cell ID groups. Thus, this embodiment makes it possible to use (three scrambling sequences) x (170 cell ID groups) = 510 scrambling codes without increasing the computational load in demodulating the P-BCH.

In a case where a channel estimate is obtained based on the S-SCH sequence and used to demodulate the P-BCH, this method makes it possible to perform channel estimation taking into account the channel, conditions of each cell and thereby to improve the accuracy of channel estimation. Also, improved accuracy in channel estimation makes it possible to improve the accuracy in demodulating the P-BCH.

### <<SEVENTH EMBODIMENT>>

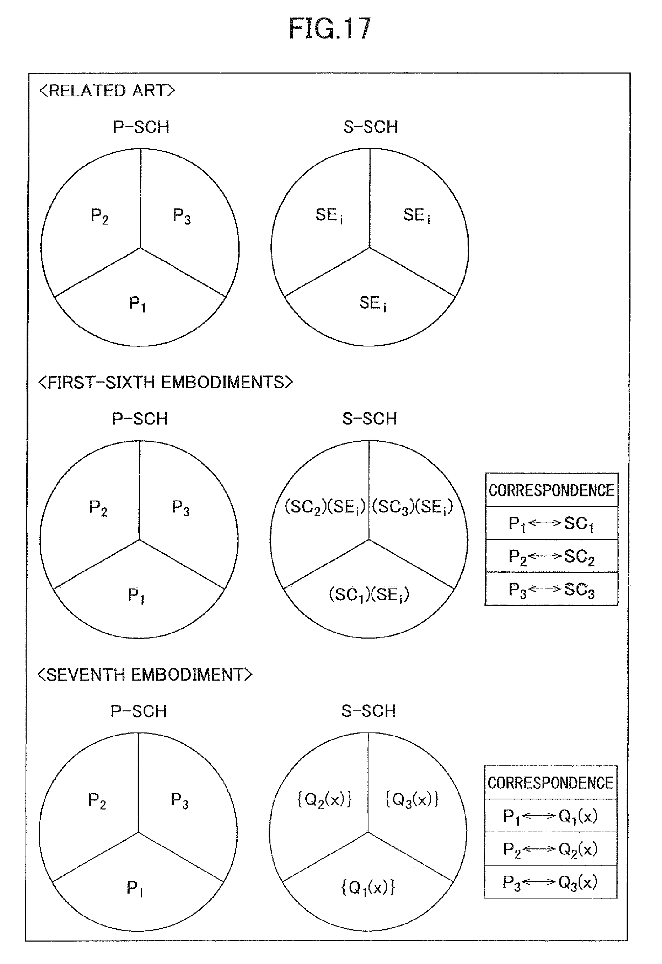

FIG. 17 is a drawing used to explain the differences between the related art, the first through sixth embodiments, and a seventh embodiment described below. In the related art, primary synchronization channels (P-SCH) P₁, P₂, and P₃ are transmitted from corresponding sectors 1, 2, and 3. Assuming that the number of sectors of each base station is three as shown in FIG. 17, different P-SCHs are transmitted from the sectors to enable the user equipment to identify the serving sector and to obtain a channel estimate in the serving sector. In this point, the embodiments of the present invention are substantially the same as the related art. In the related art, however, information representing a secondary synchronization channel (SEᵢ,
where i indicates a parameter for identifying a cell) is provided for each cell (the information is different from cell to cell) and therefore the same secondary synchronization channel SEᵢ is transmitted from plural sectors belonging to the same base station. As described above, transmitting the same signal from neighboring sectors may reduce the detection accuracy of the S-SCH near a boundary between the sectors.

In the first through sixth embodiments, the information representing the secondary synchronization channel SEᵢ is multiplied by a scrambling code SCᵢ that differs from sector to sector. With this method, even if the same SEᵢ is used in all sectors, different codes SC₁×SEᵢ, SC₂×SEᵢ, and SC₃×SEᵢ can be generated by using different scrambling codes SCᵢ for the respective sectors. In other words, this method makes it possible to transmit different S-SCHs from the respective sectors and thereby makes it possible to improve the accuracy in detecting (or demodulating) the S-SCH even near a boundary between the sectors. In the second embodiment, different primary synchronization channels Pᵢ and different scrambling codes SCᵢ are provided for the respective sectors, and the correspondence between the primary synchronization channels Pᵢ and the scrambling codes SCᵢ are predefined and known to the user equipment. This configuration allows the user equipment to quickly demodulate the S-SCH after detecting the P-SCH.

In the first through sixth embodiments, it is necessary to prepare some codes (SEᵢ) that are multiplied by scrambling codes. However, it is not essential for the present invention to use two types of codes (SCᵢ and SEᵢ) . In the seventh embodiment of the present invention, different generating polynomials Q₁(X), Q₂(X), and Q₃(X) are associated with primary synchronization channels P₁, P₂, and P₃ assigned to different sectors. The generating polynomial Qᵢ(X), for example, generates a code (or a sequence) like X⁵+X²+1. The generating polynomial Qᵢ(X) may be designed to generate any appropriate sequence. However, the generating polynomial Qᵢ(X) is preferably designed to generate a linear feedback shift register (LFSR) sequence, and more preferably defined to generate an M sequence. Here, let us assume that the generating polynomial Q₁(X) corresponding to the primary synchronization channel P₁ of sector 1 generates an M sequence with a code length of 31. In this case, the S-SCH of sector 1 is generated by combining multiple sets of one of 31 codes that can be generated by the generating polynomial Q₁(X). Similarly, the S-SCH of sector 2 is generated by combining multiple sets of one of 31 codes that can be generated by the generating polynomial Q₂(X); and the S-SCH of sector 3 is generated by combining multiple sets of one of 31 codes that can be generated by the generating polynomial Q₃(X). With this configuration, the user equipment identifies the serving sector by detecting the P-SCH and identifies the generating polynomial (e.g., Q₁(X)) used in the serving sector based on a correspondence as shown in the lower right of FIG. 17. Then, the user equipment compares a received signal with 31 codes that can be generated by the generating polynomial Q₁(X) and thereby determines one of the 31 codes used for the S-SCH. Since P-SCHs (Pᵢ) correspond one-to-one to generating polynomials (Qᵢ (X)), the user equipment does not have to consider codes generated by generating polynomials used in sectors other than the identified serving sector. In other words, the user equipment has to consider only the codes that can be generated by a generating polynomial corresponding to the detected P-SCH. In the above descriptions, for brevity, only one generating polynomial is associated with each sector. However, a combination of generating polynomials may be associated with each sector.

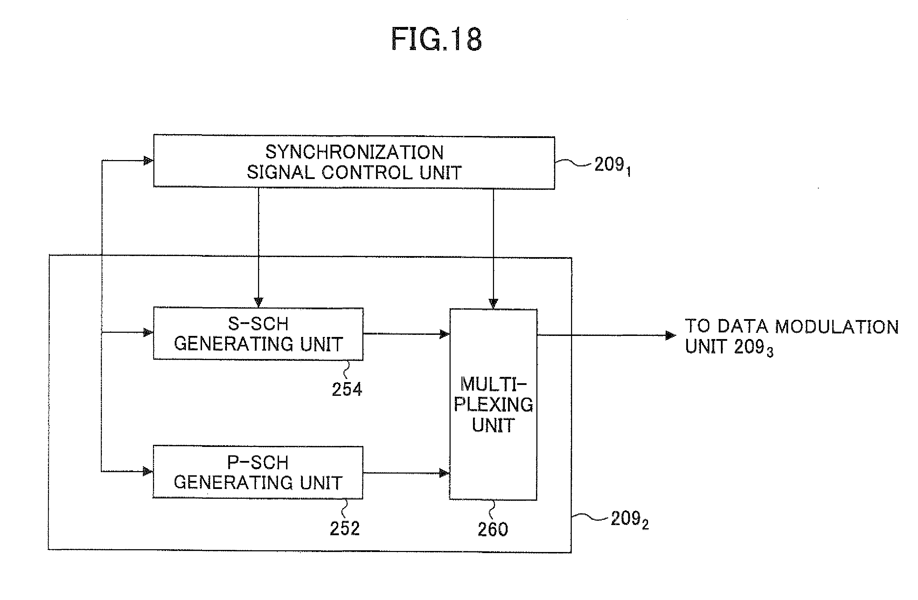

FIG. 18 is a partial block diagram of a base station according to the seventh embodiment. A synchronization signal control unit 209₁ and a synchronization signal generator 209₂ of this embodiment are shown in FIG. 18. Different from FIG. 7, the synchronization signal generator 209₂ shown in FIG. 18 does not include the scrambling sequence generating unit 258 and the multiplier 256 because no scrambling code is used in the seventh embodiment. Still, however, it is possible to use scrambling codes also in this embodiment. For example, when the same scrambling code is used for all sectors, the S-SCH generating unit 254 may be configured to multiply the S-SCH by the scrambling code. Also, when an S-SCH sequence includes first and second short codes, the S-SCH generating unit 254 may be configured to multiply the second short code by a scrambling code associated with the sequence number of the first short code (see, for example, 3GPP, R1-072661, Scrambling Method for Two S-SCH Short Code). The correspondence between P-SCHs and generating polynomials Qᵢ (X) is managed by the synchronization signal control unit 209₁. The S-SCH generating unit 254 generates a secondary synchronization channel (S-SCH) according to a request from the synchronization signal control unit 209₁ and inputs the generated S-SCH to the multiplexing unit 260. In this embodiment, the S-SCH generating unit 254 generates an S-SCH using a generating polynomial Qᵢ (X) specified by the synchronization signal control unit 209₁ and inputs the generated S-SCH to the multiplexing unit 260. Then, a synchronization channel including the S-SCH is sent to the data modulation unit 209₃ and is transmitted as a radio signal after going through the processing described above.

In the above embodiments, it is assumed that a system based on Evolved UTRA and UTRAN (also called Long Term Evolution or Super 3G) is used. However, a mobile station, a base station, and a synchronization channel transmission method according to the present invention may also be applied to any system employing orthogonal frequency division multiplexing (OFDM) for downlink.

Although specific values are used in the above descriptions to facilitate the understanding of the present invention, the values are just examples and other appropriate values may also be used unless otherwise mentioned.

The present invention is not limited to the specifically disclosed embodiments, and variations and modifications may be made without departing from the scope of the present invention. Although functional block diagrams are used to describe apparatuses in the above embodiments, the apparatuses may be implemented by hardware, software, or a combination of them.

The present international application claims priority from Japanese Patent Application No. 2007-258106 filed on October 1, 2007, the entire contents of which are hereby incorporated herein by reference.

## Claims

1. A user equipment performing a cell search and detecting cell-specific information including a cell ID, comprising:
a receiving unit configured to receive a synchronization channel;
a cell search unit configured to extract a primary synchronization channel and a secondary synchronization channel from the received synchronization channel to perform the cell search; and
a verification unit configured to verify a detection result of the cell search based on a verification start condition.

2. The user equipment as claimed in claim 1,
wherein the verification start condition includes at least one of cell search information, base station operation information, cell search step information, number-of-cell-search-tries information, received SINE information, maximum Doppler frequency, delay spread information, and neighboring cell list information.

3. The user equipment as claimed in claim 1 or 2, wherein the verification unit is configured to receive a broadcast channel scrambled by a scrambling code associated with the cell ID, to perform a cyclic redundancy check on the received broadcast channel for error detection, and to verify the detection result of the cell search based on a result of the error detection.

4. The user equipment as claimed in claim 1 or 2, wherein
the cell search unit is configured to extract the secondary synchronization channel by detecting a correlation between a cell ID group indicating a group of cell IDs and plural secondary synchronization channel sequences determined based on a radio frame timing; and
the verification unit is configured to verify the detection result of the cell search based on a result the correlation detection.

5. The user equipment as claimed in claim 1 or 2, wherein
the cell search unit is configured to generate a synchronization signal replica including three or less different sequences and to extract the primary synchronization channel by detecting a correlation between the synchronization signal replica and a received multi-carrier signal; and
the verification unit is configured to verify the detection result of the cell search based on a result the correlation detection.

6. The user equipment as claimed in claim 1 or 2, wherein
the verification unit is configured to generate a reference signal replica based on the cell ID determined based on the primary synchronization channel and the secondary synchronization channel extracted by the cell search unit and to verify the detection result of the cell search based on a cross-correlation between the reference signal replica and a received reference signal.

7. A verification method for a user equipment performing a cell search and detecting cell-specific information including a cell ID, the method comprising the steps of:
receiving a synchronization channel;
extracting a primary synchronization channel and a secondary synchronization channel from the received synchronization channel to perform the cell search; and
verifying a detection result of the cell search based on a verification start condition.
